(19) Europäisches Patentamt / European Patent Office / Office européen des brevets

(11) **EP 3 469 559 B1**

(12) **EUROPÄISCHE PATENTSCHRIFT**

(45) Veröffentlichungstag und Bekanntmachung des Hinweises auf die Patenterteilung:
**12.10.2022   Patentblatt 2022/41**

(21) Anmeldenummer: **17729011.1**

(22) Anmeldetag: **08.06.2017**

(51) Internationale Patentklassifikation (IPC):
**G07D 7/1205** $^{(2016.01)}$

(52) Gemeinsame Patentklassifikation (CPC):
**G07D 7/1205**

(86) Internationale Anmeldenummer:
**PCT/EP2017/000668**

(87) Internationale Veröffentlichungsnummer:
**WO 2017/211456 (14.12.2017 Gazette 2017/50)**

(54) **VERFAHREN ZUR ABSICHERUNG VON WERTDOKUMENTEN MIT SPEICHERLEUCHTSTOFFEN**

METHOD FOR SECURING VALUE DOCUMENTS USING STORAGE PHOSPHORS

PROCÉDÉ POUR PROTÉGER DES DOCUMENTS DE VALEUR AVEC DES SUBSTANCES LUMINESCENTES À MÉMOIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2016   DE 102016007063**

(43) Veröffentlichungstag der Anmeldung:
**17.04.2019   Patentblatt 2019/16**

(73) Patentinhaber: **Giesecke+Devrient Currency Technology GmbH**
**81677 München (DE)**

(72) Erfinder: **STARK, Martin**
**81825 München (DE)**

(74) Vertreter: **Giesecke + Devrient IP**
**Prinzregentenstraße 159**
**81677 München (DE)**

(56) Entgegenhaltungen:
**WO-A1-2007/003531      WO-A1-2008/113963**
**WO-A1-2014/132415      GB-A- 2 095 822**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Echtheitsbewertungsverfahren, das die optisch stimulierte Lumineszenz (OSL) von optischen Speicherleuchtstoffen als Echtheitsmerkmal nutzt. Die Erfindung betrifft des Weiteren eine Vorrichtung zur Durchführung des Echtheitsbewertungsverfahrens, eine Referenzbibliothek, die optische Speicherleuchtstoffe in Kombination mit ihren charakterisierenden Messsequenzen enthält, diese optischen Speicherleuchtstoffe als Echtheitsmerkmale und Wertdokumente mit solchen Echtheitsmerkmalen.

Die Absicherung von Wertdokumenten gegen Fälschungen mittels Echtheitsmerkmalen ist bekannt. Es gibt Merkmalstoffe, die z.B. auf magnetischen, thermischen, elektrischen, und/oder optischen (z.B. Absorption und Emission) Effekten beruhen, die spezifisch nachgewiesen werden können. Insbesondere ändern sich die Merkmalseigenschaften nicht durch den Nachweis: die wiederholte Durchführung derselben Messung am selben Ort liefert dasselbe Ergebnis. Solche Merkmalssysteme lassen sich als gedächtnisfrei beschreiben.

Beispiele für optische Speicherleuchtstoffe (engl.: storage phosphor) als Echtheitsmerkmale sind bekannt. In EP1316924 erfolgt das Prüfverfahren über die Detektion von Photolumineszenz bzw. über das Auftreten von optisch stimulierter Lumineszenz. Ein anorganischer Speicherleuchtstoff und ein Upconverter-Leuchtstoff werden in der WO2010064965 verwendet. In der DE102011010756 werden Herstellverfahren für nanopartikuläre Speicherleuchtstoffe sowie deren möglicher Einsatz als Marker beschrieben. Die vorbeschriebenen Verfahren verzichten auf eine quantitative Auswertung des dynamischen und charakteristischen Speicherverhaltens eines optischen Speicherleuchtstoffs als Echtheitsmerkmal und basieren stattdessen auf reproduzierbaren Messungen an definierten Zuständen. Weiterer Stand der Technik kann in der WO2014/132415A gefunden werden.

Der Nachteil der Absicherung durch diese Echtheitsbewertungsverfahren liegt darin, dass auch ein Nachahmer den optischen Speicherleuchtstoff durch übliche Messmethoden der Spektroskopie charakterisieren kann und somit potenziell in die Lage versetzt wird, Informationen zu sammeln, die ihm eine Nachstellung des Stoffs erleichtern. Eine erfolgreiche stoffliche Nachstellung würde dann auch die Echtheitsprüfung bestehen.

Der Erfindung liegt die Aufgabe zu Grunde, ein Echtheitssicherungs- bzw. Bewertungsverfahren eines Gegenstandes, insbesondere Wertdokuments, bereitzustellen, das ein Merkmalsystem nutzt, das über die enge Verknüpfung mit den Prozessen der Echtheitsbewertung hochspezifisch ist, so dass es mit den üblichen Spektroskopiemethoden nicht identifiziert werden kann und somit eine erhöhte Sicherheit gegenüber Nachahmung bietet.

Eine weitere Aufgabe der Erfindung bezieht sich auf die Bereitstellung eines Echtheitssicherungs- bzw. Bewertungsverfahrens für ein Wertdokument, das ein Merkmalsystem nutzt, das eine noch differenziertere Unterscheidung ähnlicher Merkmalsstoffe ermöglicht und somit eine erhöhte Sicherheit bietet.

Diese Aufgaben werden durch die in dem Hauptanspruch definierten Merkmalskombinationen gelöst. Bevorzugte Ausführungsformen sind Gegenstand der Unteransprüche.

[Ausführliche Beschreibung der Erfindung]

Wertdokumente im Rahmen dieser Erfindung sind Gegenstände wie Banknoten, Schecks, Aktien, Wertmarken, Ausweise, Pässe, Kreditkarten, Urkunden und andere Dokumente, Etiketten, Siegel, und zu sichernde Gegenstände wie beispielsweise Schmuck, optische Datenträger, CDs, Verpackungen und ähnliches. Bei dem Wertdokumentsubstrat muss es sich nicht zwangsläufig um ein Papiersubstrat handeln, es könnte auch ein Kunststoffsubstrat sein oder ein Substrat, das sowohl Papier-Bestandteile als auch KunststoffBestandteile aufweist. Das bevorzugte Anwendungsgebiet sind Banknoten, die insbesondere auf einem Papiersubstrat und/ oder Kunststoffsubstrat beruhen.

Optische Speicherleuchtstoffe zur Absicherung von Wertdokumenten sind im Stand der Technik bekannt. Der vorliegenden Erfindung liegt der Gedanke zugrunde, die Eigenschaften des dynamischen Zeitverhaltens optischer Speicherleuchtstoffe (OSL-Stoffe) für den Echtheitsnachweis eines Wertdokuments heranzuziehen. Dazu wird mindestens ein OSL-Stoff ausgewählt, der bezüglich mindestens einer Eigenschaft und mindestens einem Messprozess ein Gedächtnis aufweist.

In einem OSL-Stoff hängen messbare Eigenschaften von der Vorgeschichte ab, das heißt, eine Messung beeinflusst das Ergebnis der nachfolgenden Messung. Dies wird als Gedächtnis bezeichnet. Durch den Einsatz gedächtnisbehafteter Stoffsysteme als Echtheitsmerkmal entsteht eine enge Kopplung zwischen Echtheitsmerkmal und nachweisendem Prozess: Im Nachweisprozess wird dem OSL-Stoff durch den Einsatz von Messprozessen (das heißt Auflade- und/oder Ausleseprozessen), insbesondere durch Abfolgen (auch als Sequenzen bezeichnet) von gleichen und/ oder unterschiedlichen Auflade- und/oder Ausleseprozessen eine spezifische Geschichte aufgeprägt und das spezifische dynamische Verhalten des gedächtnisbehafteten Systems auf diese Geschichte geprüft. Weil dadurch die Reihenfolge von Ereignissen das Systemverhalten beeinflusst, kann Gedächtnis auch als Pfadabhängigkeit des Systems aufgefasst werden.

Eine Pfadabhängigkeit des Systems kann insbesondere bei einer Nichtkommutativität zweier Messprozesse vorliegen. Beispielsweise wird der optische Speicherleuchtstoff mit einem ersten und einem zweiten Ausleseprozess ausgelesen. Hierbei ist es möglich, dass der erste Ausleseprozess das System derart beeinflusst, dass das Ergebnis des zweiten Ausleseprozesses von dem ersten Ausleseprozess abhängt. Eine Änderung der Reihenfolge der Ausleseprozesse führt dann vorzugsweise zu einem unterschiedlichen Ergebnis.

Bevorzugt werden in einem optischen Speicherleuchtstoff im Aufladeprozess Ladungsträger an energetisch unterschiedlich liegenden Fallenzentren gespeichert. Besonders bevorzugt lässt sich durch unterschiedliche Aufladeprozesse, die sich vorzugsweise in ihren Intensitäten, Dauern, Pulsformen und/ oder (optischer) Wellenlängen unterscheiden, die Verteilung der Ladungsträger auf die Fallenzentren beeinflussen. Zudem ändert sich die Verteilung der an Fallenzentren gespeicherten Ladungsträger durch interne Relaxationen und insbesondere durch externe Einflüsse wie beispielsweise Temperatur. Weil nicht nur der Einfluss eines einzelnen Aufladeprozesses sondern auch die zeitliche Abfolge mehrerer Aufladeprozesse die Verteilung beeinflusst, werden die Ladungsverteilungen auf den Fallenzentren als Folge unterschiedliche Aufladepfade festgelegt, was die oben genannte Pfadabhängigkeit illustriert.

Ebenso lässt sich bevorzugt die Verteilung der Ladungsträger durch für unterschiedliche Ausleseprozesse, die vorzugsweise in Intensität, Dauer, Pulsform und/oder Wellenlänge unterschiedlich sind, und unterschiedlichen Abfolgen von Ausleseprozessen sowie für unterschiedliche Abfolgen von Mischungen aus Auflade- und Ausleseprozessen beeinflussen.

In welcher spezifischen Weise ein OSL-Stoff auf einen konkreten Auflade-oder Auslesepuls oder insbesondere auf eine konkrete Abfolge von Auflade-und/oder Auslesepulsen reagiert, stellt die für den uneingeweihten Nachahmer versteckte Information dar, die erfindungsgemäß im Nachweisprozess verwendet wird.

Dazu werden aus Auflade- und Ausleseprozessen Sequenzen aufgebaut, die geeignet sind, charakteristische Gedächtniseigenschaften des OSL-Stoffs zu bestimmen (Beispiel: Hintereinander fortgeführte Ausführung der Messung von optisch stimulierter Lumineszenz (OSL), um eine Gedächtnisstärke zu bestimmen).

In einem geeigneten Detektor wird das erfindungsgemäß markierte Wertdokument mit einer oder mehreren Sequenzen gemessen und aus den zugehörigen Ergebnissen charakteristische Gedächtniseigenschaften bestimmt. Durch Vergleich mit einer Vorgabe wird Echtheit nachgewiesen (Beispiel: an einem OSL-Stoff werden mit einem Sensor, der mindestens einen Auflade-und zwei verschiedene Ausleseprozesse realisiert, Gedächtnisstärke, Vertauschbarkeitsregeln und Sensitivität mit verschiedenen Sequenzen bestimmt und mit der Vorgabe verglichen).

Der Echtheitsnachweis wird somit aus einem statischen Parameterraum (der beispielsweise aus Intensitäten, spektraler Verteilung und Lebensdauern besteht) in einen zeitlichen Ablauf verlagert. Die Spezifität des Gedächtnisses des OSL-Stoffs muss zur Spezifität der durch den Sensor aufgeprägten Geschichte passen, damit die Echtheit positiv nachgewiesen wird. Zur Umsetzung werden erfindungsgemäß OSL-Stoffe als Echtheitsmerkmal zur Echtheitssicherung vorgeschlagen, wobei zur Echtheitsbewertung mehrere Gedächtniseigenschaften herangezogen werden (bevorzugt mehrere $\geq 2$, 3, ... unterschiedliche charakteristische Eigenschaften oder eine charakteristische Eigenschaft bei mehreren $\geq 2$, 3, ... unterschiedlichen Messparametern). Im Nachweis wird dem OSL-Stoff eine Geschichte aufgeprägt, indem eine oder mehrere ausgewählte (gleiche oder unterschiedliche) Auflade- bzw. Abfragesequenzen von Auflade- bzw. Ausleseprozessen auf das System angewendet werden. Aus der Reaktion/ Antwort des OSL-Stoffs auf diese eine oder mehrere Sequenz(en) wird das dynamische Verhalten bestimmt und zur Echtheitsbewertung herangezogen.

Ein Messwert betrifft eine charakteristische Eigenschaft des Speicherleuchtstoffs. Der Messwert beschreibt vorzugsweise eine Speicherladung, besonders bevorzugt Lichtemission, des Speicherleuchtstoffs. Der Messwert kann zu einem beliebigen oder fest vorgegebenen Zeitpunkt erfasst werden. Beispielsweise können vor, während oder nach einem Ausleseprozess ein oder mehrere Messwerte erfasst werden. Gemäß einer Ausgestaltung wird der erste Messwert zum Speicherleuchtstoff erfasst, anschließend der Speicherleuchtstoff mit einem Aufladeprozess beaufschlagt, wobei der Aufladeprozess einen oder mehrere Aufladepulse umfasst und daran anschließend wird der zweite Messwert erfasst. Grundsätzlich kann der erste und/ oder zweite Messwert unabhängig von anderen Prozessen des Verfahrens erfasst werden. In einer Ausgestaltung sind wenigstens der erste und/ oder zweite Messwert mit dem Ausleseprozess assoziiert, so dass dieser erste und/ oder zweite Messwert als erster bzw. zweiter Auslesemesswert definiert sind.

Der erste und zweite Messwert können zur Echtheitsbewertung, beispielswiese durch Vergleich mit Referenzdaten herangezogen werden. Weiterhin ist die Verwendung wenigstens eines der Messwerte zur Regelung und Steuerung des Aufladeprozesses denkbar. Der wenigstens eine Messwert (insbesondere erste Messwert) kann in einem Regelkreis eingebunden sein, wobei Inhalte des wenigstens einen Messwerts Parameter des Aufladeprozesses beeinflussen, beispielsweise eine Wellenläge bzw. einen Bereich von Wellenlängen, eine Impulsdauer eines Pulses, die Anzahl von Pulsen und/ oder die Form eines oder mehrerer Pulse zur Aufladung des Speicherleuchtstoffs. Weiterhin kann wenigstens einer der Messwerte als Trigger, beispielsweise zur Auslösung eines Ereignisses und/ oder eines Prozesses, z. B. Ausleseprozess herangezogen werden.

Das Verfahren umfasst wenigstens einen Ausleseprozess. Der wenigstens eine erste und/ oder zweite Messwert basiert auf eine Detektion einer Lichtemission in Antwort auf wenigstens einen Ausleseprozess. Derartig erfasste Messwerte werden als Auslesemesswerte definiert. Das Verfahren umfasst wenigstens zwei Ausleseprozesse, wobei zu jedem Ausleseprozess mindestens ein Auslesemesswert erfasst wird.

Werden mehrere Ausleseprozesse durchgeführt, können diese in eine Abfragesequenz zusammengeführt werden. Vorzugsweise handelt es sich bei den Ausleseprozessen einer Abfragesequenz um eine Erfassung von zusammenhängenden Auslesemesswerten. Das Verfahren umfasst eine oder mehrere Abfragesequenzen. Um die Unterteilung der Abfragesequenzen zu verdeutlichen, ist exemplarisch in der folgenden Graphik eine Abfragesequenz schematisch dargestellt. Eine Abfragesequenz umfasst wenigstens einen ersten und einen zweiten Ausleseprozess. Bevorzugt umfassen Ausleseprozesse wenigstens einen Puls a1 (bzw. a2, a3,...). In einer Variante der Erfindung werden im Rahmen eines Ausleseprozesses mehrere Pulse gruppiert, wobei zwar zu jedem Ausleseprozess, aber nicht zwingend zu jedem Puls mindestens ein Auslesemesswert erzeugt wird. Die von den Ausleseprozessen erfassten Auslesemesswerte werden in zeitlicher Reihenfolge aufgezeichnet. Aus diesen aus Schritt c.) des Verfahrens erfassten Auslesemesswertzeitreihen ergeben sich wiederum Auslesekurven, welche aufgrund ihrer Form oder durch Parameter, welche aus den Kurven abgeleitet werden, zur Echtheitsbewertung herangezogen werden.

## Abfragesequenz

| 1. Ausleseprozess | 2. Ausleseprozess | 3. Ausleseprozess |
|---|---|---|
| Pulse: a1, b1, c1, d1, … | Pulse: a2, b2, c2, d2, … | Pulse: a3, b3, c3, d3, … |

| 1.Auslesemesswert | 2.Auslesemesswert | 3.Auslesemesswert |
|---|---|---|

Alternativ werden zu einem Ausleseprozess oder zu mehreren Ausleseprozessen nicht nur ein einzelner Auslesemesswert sondern mehrere Auslesemesswerte erfasst und entsprechend ihrer zeitlichen Abfolge zur Auslesemesswertzeitreihe geordnet. Eine Sequenz von mehreren Ausleseprozessen ergibt eine Abfragesequenz. Analog können mehrere Aufladeprozesse eine Aufladesequenz ergeben.

Der Ausleseprozess oder der Aufladeprozess in Kombination mit einer Messung bildet einen Messprozess. Das Ergebnis eines Messprozesses, wie z.B. eines Ausleseprozesses, ist ein Signal S, das vom Prozess P, also $S(P)$, abhängt und den optischen Speicherleuchtstoff relevant charakterisiert (beispielsweise die spektral aufgelöste Messung einer Lichtemission eines lumineszierenden Stoffes). Der Messprozess ist durch das Messverfahren und durch zugehörige Messparameter festgelegt.

Unter dynamischem Verhalten wird die Zeitabhängigkeit einer Messgröße verstanden. Es können aus verschiedenen Messgrößen unterschiedliche Zeitabhängigkeiten bestimmt werden. Vorzugsweise dient die quantitative Auswertung des dynamischen Verhaltens dazu, eine Auswertung auf zeitliche dynamische Größen zu ermöglichen. Dynamische zeitliche Messgrößen sind Messgrößen, die mindestens in der Zeit und in einer weiteren physikalischen Eigenschaft einer Messung miteinander verknüpft sind. Die Zeitabhängigkeit einer Messgröße spiegelt sich in der dazugehörigen Auslesemesswertzeitreihe wieder. Durch eine quantitative Auswertung der Auslesemesswertzeitreihe kann mindestens eine charakteristische Gedächtniseigenschaft des entsprechenden optischen Speicherleuchtstoffs bestimmt werden und diese wiederum als Echtheitsmerkmal zur Unterscheidung dienen.

Referenzauslesemesswertzeitreihen können beispielsweise in einer Look-up Tabelle hinterlegt und zum Abgleichen von erfassten Auslesemesswertzeitreihen in einem Verfahren zur Unterscheidung von optischen Speicherleuchtstoffen verwendet werden.

Eine Referenzbibliothek umfasst wenigstens solche Sequenzen, Parameter und die entsprechenden Tabellen, die geeignet sind, in relevant diskriminierenden Echtheitsnachweisen für verschiedene, zu einem OSL-Stoff gehörende Merkmale eingesetzt zu werden.

Optische Speicherleuchtstoffe als Echtheitsmerkmal

Für eine erfindungsgemäße Absicherung, beispielsweise eines Wertdokuments, wird ein ausgewählter OSL-Stoff als Echtheitsmerkmal in Form eines Zuschlagstoffes zum Substrat (Papier oder Polymer) in das Wertdokument oder in ein Folienelement eingebracht und/ oder in Form einer Druckfarbe oder Beschichtungszusammensetzung auf das Wertdokument aufgebracht. (Beispiel: thermochromer Stoff in Druckfarbe, OSL-Stoff im Papiersubstrat). Alternativ oder zusätzlich ist auch das Einbringen des OSL-Stoffs oder Beschichten mit dem OSL-Stoff in bzw. auf einer metallischen oder metallisierten Folie denkbar. Weiterhin kann der OSL-Stoff als Zuschlagstoff einer Beschichtung des Substrats oder einer weiteren Schicht des Wertdokuments verwendet werden, insbesondere bei einem Verbundmaterial aus mehreren Einzelschichten, welche das Substrat und/ oder das Wertdokument bilden. Selbstverständlich kann auch eine Kombination wenigstens zweier der dargelegten Beispiele zur Verwendung des Speicherleuchtstoffs angewandt werden. Grundsätzlich ist der Formfaktor des Wertdokuments nicht auf flächige, blattförmige Ausgestaltung beschränkt.

Im OSL-Stoff wirken typischerweise zwei optisch aktive Systeme im Festkörper zusammen. Insbesondere kann es sich bei den zwei optisch aktiven Systemen um Leuchtzentren und Fallenzentren in einem Festkörper handeln. Die Leuchtzentren bilden das erste, Licht emittierende System. Im zweiten System, bestehend aus den Fallenzentren, können Ladungsträger im elektronischen Grundzustand der Fallenzentren stabil gespeichert werden. Im OSL-Stoff existieren Fallenzentren, von denen die gespeicherten Ladungsträger durch die thermische Energie bei Raumtemperatur nicht in signifikantem Maße freigesetzt werden. Erfindungsgemäß ist die mittlere Verweildauer (Persistenz) der Ladungsträger in diesen Fallenzentren bei Raumtemperatur länger als die Dauer des Echtheitsbewertungsverfahrens. Die Echtheitsbewertung findet vorzugsweise in einer Banknotenbearbeitungsvorrichtung, beispielsweise bei einer Zentralbank, statt. Bei derartigen Maschinen findet meistens eine Echtheitsbewertung innerhalb von weniger als 0,1 s insbesondere in einem Bereich von weniger als 0,05 s statt. Bei der Prüfung von Ausweisdokumenten kann die Echtheitsbewertung auch länger als 1s dauern. Je nach Verwendungszweck ist es vorteilhaft, dass die Persistenz wenigstens der Zeit der Echtheitsbewertung entspricht. Bevorzugt ist die Persistenz länger als die fünffache Dauer des Echtheitsbewertungsverfahrens, besonders bevorzugt länger als die hundertfache Dauer. Bevorzugt ist die Persistenz länger als 10 ms, besonders bevorzugt länger als 1 s, und noch bevorzugter länger als 5 min.

Die Freisetzung der in diesen Fallenzentren gespeicherten Ladungsträger geschieht erst durch die Zufuhr einer geeigneten Energiemenge, z. B. durch die Bestrahlung mit Licht (Ausleseprozess). Die freigesetzten Ladungsträger können dann an einem Leuchtzentrum unter der Emission von Licht relaxieren (Lichtemission beim Auslesen).

In Abgrenzung zur Phosphoreszenz, bei der im Leuchtzentrum selbst angeregte Ladungsträger in einen Triplettzustand gebracht werden und aus diesem spontan mit einer charakteristischen Zeitkonstante in einen anderen Zustand des Leuchtzentrums relaxieren, gehen in einem OSL-Stoff bei Beaufschlagung mit einem Aufladeprozess Ladungsträger von Leuchtzentren auf davon verschiedene Fallenzentren über. Leuchtzentren und Fallenzentren unterscheiden sich durch ihre räumliche Position und/oder ihre chemische Identität. Bevorzugt handelt es sich bei Leuchtzentren und Fallenzentren um verschiedene Dotier-Ionen. Beim Auslesen gehen Ladungsträger von Fallenzentren auf Leuchtzentren über und können dort unter Aussendung von Lumineszenz strahlend relaxieren. Ein Aufladen des OSL-Stoffs kann beispielsweise einer Oxidation der Leuchtzentren und einer Reduktion der Fallenzentren entsprechen. Umgekehrt kann der Ausleseprozess einer Reduktion der Leuchtzentren und einer Oxidation der Fallenzentren entsprechen.

Bei dem Übergang der Ladungsträger von den Fallenzentren auf die Leuchtzentren handelt es sich somit insbesondere nicht um einen spontanen Übergang, bei dem sich ein angeregter Zustand intrinsisch, also ohne äußere Einflüsse, abregt. Vielmehr ist es bevorzugt, dass der Übergang der Ladungsträger von den Fallenzentren auf die Leuchtzentren (oder auch umgekehrt von den Leuchtzentren auf die Fallenzentren) durch externe Einwirkungen, wie einem Aufladeprozess und/oder einem Ausleseprozess, stimuliert werden muss. Daher spricht man im Zusammenhang mit dem Auslesen von OSL-Stoffen auch von optisch stimulierter Lumineszenz (OSL).

Beim Aufladeprozess und/oder beim Ausleseprozess weist der Speicherleuchtstoff bevorzugt aufgrund der Bewegung der Ladungsträger eine veränderte lichtinduzierte elektrische Leitfähigkeit auf. Es ist insbesondere bevorzugt, dass sich die elektrische Leitfähigkeit des OSL-Stoffes während des Aufladeprozesses und/oder während des Ausleseprozesses verändert. Bevorzugt zeigt der OSL-Stoff während des Aufladeprozesses und/oder während des Ausleseprozesses eine maximale elektrische Leitfähigkeit, die höher, insbesondere um mindestens 50% höher, ist als außerhalb dieser Prozesse. Mit anderen Worten, der Speicherleuchtstoff kann während des Beaufschlagens mit der Abfragesequenz, insbesondere während des Beaufschlagens mit dem ersten und/ oder dem zweiten Ausleseprozess, eine elektrische Leitfähigkeit aufweisen, die höher ist als außerhalb des Beaufschlagens.

Weil die Fallenzentren ein gegenüber den Leuchtzentren eigenständiges optisches System darstellen, sind die zugehörigen Ladungsträger-Zustände grundsätzlich unabhängig voneinander. Das Anregungsspektrum der in Fallenzentren gespeicherten Ladungsträger (also das Auslesespektrum) ist nicht durch das Anregungs- oder Emissionsspektrum der Leuchtzentren festgelegt. Ebenso ist das Anregungs- oder Emissionsspektrum der Leuchtzentren nicht durch das Auslesespektrum der Fallenzentren festgelegt. Insofern grenzt sich optisch stimulierte Lumineszenz auch von der üblichen, durch simultane Mehrphotonenprozesse induzierten Upconversion oder Antistokes-Phänomenen ab.

Analog zum Aufladespektrum, das Aufschlüsse über Eigenschaften der Leuchtzentren gibt, lässt sich das Auslesespektrum messen, um Eigenschaften der Fallenzentren zu charakterisieren. Um das Auslesespektrum zu messen, wird der teilweise aufgeladene OSL-Stoff mit Licht bestrahlt (Ausleseprozess) und das emittierte Licht in einem festgelegten Wellenlängenbereich gemessen, wobei die Wellenlänge des eingestrahlten Lichts verändert wird. So erhält man für den geladenen OSL-Stoff die Abhängigkeit der optisch stimulierten Lumineszenz von der Wellenlänge des auslesenden Lichts. Entsprechend kann für das Messen des Aufladespektrums vorgegangen werden, wobei der OSL-Stoff hierfür bevorzugt nicht vollständig aufgeladen sein sollte.

Hierbei wird ein OSL-Stoff als teilweise aufgeladen bezeichnet, wenn zumindest so viele Ladungsträger an den Fallenzentren gespeichert sind, dass sich bei Bestrahlung mit einem Ausleseprozess ein messbares Lumineszenzsignal ergibt. Dabei stellt die Anzahl der gespeicherten Ladungsträger bevorzugt eine makroskopisch kontinuierliche Variable dar.

Das Auslesespektrum kann deutliche Bandenstrukturen aufweisen. Auch wenn das Auslesespektrum Banden zeigt, entspricht es bevorzugt nicht einem Einzelmolekülspektrum. Es kann also aus dem Spektrum nicht gefolgert werden, ob ein konkretes Fallenzentrum gefüllt oder leer ist. In diesem Sinne verhält sich ein Speicherleuchtstoff nicht wie ein diskreter Speicher.

In Analogie zum Auslesespektrum beschreibt das Aufladespektrum die spektrale Verteilung der Effizienz von Aufladevorgängen.

Messvorrichtung

Die Messung für den Echtheitsnachweis wird mit einer auf den verwendeten optischen Speicherleuchtstoff abgestimmten Messvorrichtung durchgeführt. Der Echtheitsnachweis nutzt die Abhängigkeit des Messsignals von der Vorgeschichte, also das Gedächtnis des optischen Speicherleuchtstoffs aus. Bevorzugt wird hierzu das Wertdokument mit Licht bestrahlt und die entstehende Lumineszenz gemessen.

In einer ersten Ausführung kommt zur Beleuchtung mindestens eine Lichtquelle zum Einsatz, wobei die Wellenlänge der Lichtquelle, nämlich die Schwerpunktswellenlänge, geeignet ist, den optischen Speicherleuchtstoff auszulesen. Bevorzugt ist dabei der Wellenlängenbereich von 360 nm bis 1200 nm, besonders bevorzugt der Wellenlängenbereich von 550 nm bis 1000 nm. In einer weiteren bevorzugten Ausprägung wird unterschieden zwischen einem ersten, einem zweiten und einem dritten Wellenlängenbereich, aus dem die mindestens eine Lichtquelle bevorzugt ausgewählt wird. Der erste Wellenlängenbereich erstreckt sich von 360 nm bis 550 nm, bevorzugt von 360 nm bis 405nm, der zweite Wellenlängenbereich von 550 nm bis 1000 nm, bevorzugt von 600nm bis 750 nm und der dritte Wellenlängenbereich von 750 bis 1200 nm, bevorzugt von 750nm bis 1000nm. In einer besonders bevorzugten Ausgestaltung beträgt der zweite Wellenlängenbereich 620-660 nm und der dritte Wellenlängenbereich 750-1000 nm.

In einer bevorzugten Ausführung kommt zusätzlich mindestens eine zweite Lichtquelle zum Einsatz, die bei gleicher Wellenlänge emittiert.

In einer weiter bevorzugten Ausführung kommt zusätzlich mindestens eine zweite Lichtquelle zum Einsatz, die bei einer Wellenlänge emittiert, die sich von der Emissionswellenlänge der ersten Lichtquelle unterscheidet. Bevorzugt sind die erste und zweite Lichtquelle derart ausgestaltet, dass der erste Ausleseprozess der ersten Lichtquelle und zweite Ausleseprozess der zweiten Lichtquelle mindestens zwei spektral getrennte Auslesewellenlängen aufweisen.

Weiter bevorzugt weicht die Wellenlänge der zweiten Lichtquelle signifikant von der ersten Lichtquelle ab und ist geeignet, den optischen Speicherleuchtstoff auszulesen. Ein signifikanter Unterschied in der Wellenlänge wird erreicht, wenn sich die Wellenlänge um mehr als die halbe Halbwertsbreite (HWHM) der adressierten Bande des Auslesespektrums unterscheiden, oder indem sie unterscheidbare Strukturen des Auslesespektrums adressieren, wie beispielsweise unterschiedliche Banden oder ein Minimum und ein Maximum im Auslesespektrum.

In einer insbesondere bevorzugten Ausprägung werden die beiden Auslesewellenlängen aus zwei unterschiedlichen der zuvor genannten Wellenlängenbereiche ausgewählt.

In einer weiteren bevorzugten Ausführung kommt eine dritte Lichtquelle zum Einsatz, deren Wellenlänge im Bereich von 240 nm bis 550 nm, bevorzugt im Bereich 350 nm bis 550 nm, insbesondere bevorzugt im Bereich 380 nm bis 550 nm liegt. In einer Ausprägung ist das Licht der Lichtquelle in diesem Wellenlängenbereich geeignet, den optischen Speicherleuchtstoff aufzuladen, in einer weiteren Ausprägung ist das Licht dieser Lichtquelle geeignet, den optischen Speicherleuchtstoff auszulesen. Dabei kann die dritte Lichtquelle sowohl zum Aussenden des Aufladepulses als auch zum Aussenden des Auslesepulses eingesetzt werden.

In einer alternativen Ausführung weist die Vorrichtung eine dritte Lichtquelle auf, die geeignet ist, das Echtheitsmerkmals im Bereich des optischen Speicherleuchtstoffs mit einem Präparationsschritt zu beaufschlagen. Dieser kann beispielsweise dazu geeignet sein, eine teilweise Aufladung des Speicherleuchtstoffs zu bewirken, um beispielsweise gewünschte Signalhöhen in folgenden Ausleseprozessen vorzubereiten.

Die genannten Lichtquellen lassen sich bevorzugt gepulst betreiben, dabei liegen nominelle Wiederholfrequenzen im Bereich von 0,1 kHz bis 50 MHz. Zusätzlich lassen sich die Lichtquellen in ihrer Intensität, Leuchtdauer und zeitlichem Verlauf steuern.

Zur Festlegung der Pulsdauer der Aufladepulse nehmen das Prüfverfahren des OSL-Stoffs und/ oder der OSL-Stoff selbst Einfluss. So ist in einer ersten bevorzugten Ausprägung beispielsweise zum Prüfen eines bewegten OSL-Stoffs mit kleiner Lumineszenzlebensdauer die Pulsdauer der Aufladepulse zwischen 1$\mu$s und 100ms, bevorzugt zwischen 10 $\mu$s und 1ms, insbesondere bevorzugt zwischen 10 $\mu$s und 100$\mu$s. In einer weiteren bevorzugten Ausprägung, beispielsweise zum Prüfen eines ruhenden OSL-Stoffs und/ oder eines OSL-Stoffs mit langer Lumineszenzlebensdauer, lieg die Pulsdauer der Aufladepulse zwischen 1μs und 100ms, bevorzugt zwischen 500 μs und 50ms, insbesondere bevorzugt zwischen 1ms und 20ms.

Zur Festlegung der Pulsdauer der Auslesepuls nehmen das Prüfverfahren des OSL-Stoffs und/ oder der OSL-Stoff selbst Einfluss. In einer ersten bevorzugten Ausprägung, beispielsweise zum Prüfen eines bewegten OSL-Stoffs mit kleiner Lumineszenzlebensdauer, liegen die Pulsdauer der Auslesepulse zwischen 1μs und 100ms, bevorzugt zwischen 1 μs und 100μs, insbesondere bevorzugt zwischen 5 μs und 50μs. In einer weiteren bevorzugten Ausprägung, beispielsweise zum Prüfen eines ruhenden OSL-Stoffs und/ oder eines OSL-Stoffs mit langer Lumineszenzlebensdauer, lieg die Pulsdauer der Auslesepulse zwischen 1μs und 100ms, bevorzugt zwischen 20 μs und 5ms, insbesondere bevorzugt zwischen 40μs und 1ms. Der Auslesepuls ist vorzugsweise kürzer als der Aufladepuls.

Durch geeignete Auswahl der Pulsdauer der Aufladepulse und Auslesepulse ist somit in geeigneter Weise ein Prüfung von ruhenden und/ oder bewegten OSL-Stoffen möglich.

In einer Ausführung werden die Lichtpulse auf näherungsweise denselben Ort auf dem Wertdokument gestrahlt und die Lichtemission im genannten geeigneten Spektralbereich gemessen und als Zeitreihe aufgezeichnet.

In einer Weiterbildung der Erfindung erfolgt die Messung der Lumineszenzemission des optischen Speicherleuchtstoffs mit mindestens einem Photodetektor in einem geeigneten spektralen Bereich, der mindestens einen Teil des Emissionsspektrums des optischen Speicherleuchtstoffes umfasst. Dieser Bereich wird als spektrales Detektionsfenster bezeichnet.

In einer ersten Ausführung hat die Detektion eine zeitliche Auflösung, die geeignet ist, die Auslesekurve angepasst an das Echtheitsmerkmal aufzulösen, insbesondere im Pulsbetrieb die Emission als Wirkung eines einzelnen Pulses zu messen und insbesondere im Pulsbetrieb eine zeitliche Auflösung von < 20 μs, bevorzugt < 5 μs, noch bevorzugter von < 1 μs zu haben.

In einer weiteren Ausführung weist der Detektor einen einzigen Kanal auf, wobei das Licht aus dem gesamten spektralen Detektionsfenster akkumuliert wird.

In einer weiteren, bevorzugten Ausführung weist der Detektor mindestens einen zweiten Kanal auf, dessen spektrales Detektionsfenster sich mindestens in einem spektralen Bereich vom Detektionsfenster des ersten Kanals unterscheidet.

In einer bevorzugten Ausführung weist die Vorrichtung eine Detektionseinrichtung auf, die zur Erfassung eines zweiten spektralen Bereichs angepasst ist, der sich von dem ersten spektralen Bereich unterscheidet. Vorzugsweise ermöglicht die Detektionseinrichtung eine mehrkanalige Detektion mit mehr als zwei, bzw. drei Kanälen auf, die insbesondere bevorzugt mehrere spektrale Bereiche umfassen.

Die Messvorrichtung kann so angeordnet sein, dass sie das Wertdokument an einer Stelle bewertet.

Bevorzugt ist die Messvorrichtung so angeordnet, dass das Wertdokument beispielsweise linear an der Messvorrichtung vorbeigeführt wird und so eine ganze Messspur erfasst wird. Insbesondere bevorzugt ist, dass das Wertdokument an mindestens zwei räumlich in einer anderen Richtung als der Bewegungsrichtung gegeneinander versetzten Messvorrichtungen vorbeigeführt wird, so dass mindestens zwei Messpuren erfasst werden.

Weiter im Besonderen ist die Vorrichtung mit einem Hintergrundsystem zum Abgleichen von Auslesemesswertzeitreihen mit Referenzauslesemesswertzeitreihen verbunden. Vorzugsweise weist das Hintergrundsystem zur Auswertung der Auslesemesswertzeitreihe eine Recheneinheit, beispielsweise einen Computer oder eine EDV-Anlage auf. In einer bevorzugten Ausführungsform weist das Hintergrundsystem zusätzlich einen Datenspeicher oder einen Cloudspeicher auf, die geeignet ist, die Referenzbibliothek mit den entsprechenden Auslesemesswert-zeitreihen, den entsprechenden Look-Up-Tabellen und den entsprechenden Messparametern zu speichern, um diese bei einer Echtheitsprüfung zur Verfügung zu stellen.

Insbesondere bevorzugt weist das Hintergrundsystem eine EDV-Anlage auf, die zur Auswertung der Auslesemesswertzeitreihe und zum Abgleich dieser mit Referenzzeitreihen aus einer gespeicherten Referenzbibliothek geeignet ist. Durch den Abgleich beispielsweise der Auslesekurve mit bekannten Auslesekurven von ausgewählten optischen Speicherleuchtstoffen erfolgt dann die Echtheitsprüfung des untersuchten optischen Speicherleuchtstoffs.

Insbesondere kann das Hintergrundsystem Teil einer Banknotenbearbeitungsmaschine sein oder mit einer Banknotenbearbeitungsmaschine verbunden sein.

Vorkonfigurationsschritt (Präparationsschritt)/ Aufladen

In einem ersten Hauptaspekt der Erfindung wird lediglich gefordert, dass der Speicher sich von vornherein in einem auslesbaren Zustand befindet oder zuvor aufgeladen wird, aber nicht zwingend vollständig oder in einem anderen, genauer definierten Zustand (z.B. Sättigung, Mindestmenge gespeicherter Ladungsträger) gebracht wurde. Technisch wäre ein definierter Zustand ohne vorangehende Messung kaum zu erreichen, da der Speicherleuchtstoff unter Umständen auch außerhalb der Messung aufladenden oder entladenden, wie z.B. auslesenden Einflüssen, unterworfen ist. Der definierte Zustand ((Vor-)konfiguration, kann gegebenenfalls auch Präparation genannt werden) kann beispielsweise mittels Aufladen des Speicherleuchtstoffs erreicht bzw. der Speicherleuchtstoff entsprechend eingestellt werden.

Diese Einflüsse und deren Wirkung sind zu Beginn des Echtheitsnachweises nach der vorliegenden Erfindung nicht notwendig bekannt.

Das Aufladen des optischen Speicherleuchtstoffs kann daher unabhängig von einer nachfolgenden Aufladesequenz und/ oder Abfragesequenz erfolgen.

In einer ersten Ausprägung wird der optische Speicherleuchtstoff für die Echtheitsbewertung innerhalb der Messvorrichtung nicht gezielt aufgeladen, sondern es wird ausgenutzt, dass der optische Speicherleuchtstoff auch außerhalb der Messung aufladenden Einflüssen (zum Beispiel einer zuvor durchgeführten Messung mit einem anderen Röntgen-, UV- oder VIS- Sensor) unterworfen war.

In einer weiteren Ausprägung lässt sich der optische Speicherleuchtstoff für die Echtheitsbewertung mit Licht unspezifisch bzw. universell aufladen. Dazu kann z.B. eine breitbandig emittierende Lichtquelle (Blitzlampe) eingesetzt werden.

Zum Aufladen des OSL-Stoffs kann beispielsweise Licht einer Wellenlänge zwischen 240 nm und 550 nm verwendet. Insbesondere lässt sich der optische Speicherleuchtstoff mit Licht einer Wellenlänge größer 250 nm und insbesondere mit sichtbarem Licht (Wellenlänge größer 400 nm) aufladen. In einer Ausgestaltung wird Licht in einem ersten Wellenlängenbereich von 275 nm bis 285 nm oder einem zweiten Wellenlängenbereich von 350 nm bis 550 nm, besonders bevorzugt in einem ersten Wellenlängenbereich von 385 nm bis 405 nm oder in einem zweiten Wellenlängenbereich von 440-460 nm, und insbesondere bei einer Wellenlänge von 450 nm verwendet.

In einer besonders bevorzugten Ausprägung, lässt sich der optische Speicherleuchtstoff mit einem gepulsten Lichtstrahl und insbesondere bevorzugt mit einem gepulsten Lichtstrahl mit einer Pulsdauer unter 0,1 Sekunden aufladen.

Diese Lichtpulse werden von den oben genannten Lichtquellen auf näherungsweise denselben Ort auf dem Wertdokument gestrahlt und die Lichtemission im genannten geeigneten Spektralbereich gemessen und als Auslesemesswertzeitreihe aufgezeichnet.

In einem zweiten Hauptaspekt der Erfindung wird eine spezifische Aufladung des Speichers vorausgesetzt. Diese Variante der Erfindung wird später im Detail beschrieben.

In einer Weiterbildung weist das Verfahren sogar vor dem Beaufschlagen des optischen Speicherleuchtstoffs mit wenigstens einer Auflade- und/oder Abfragesequenz noch den Schritt auf: Anregen des optischen Speicherleuchtstoffs mit wenigstens einem zusätzlichen Präparationsschritt. Dies dient zur Einstellung eines bestimmten Ausgangszustands. Besonders bevorzugt ist jedoch für die vorliegende Erfindung, dass das Verfahren ohne vorherige zusätzliche Präparation eines definierten Ausgangszustands des optischen Speicherleuchtstoffs erfolgt.

Für die Echtheitsüberprüfung wird im Echtheitsmerkmal, das eine unbestimmte aber nicht vernachlässigbare Menge an Ladungsträgern bereits gespeichert hat, eine Messhistorie durch die Anwendung spezifischer (bevorzugt periodischer oder auch aperiodischer) Anregungssequenzen aus Anregungspuls(en) und/ oder kontinuierlich modulierter Anregung aufgeprägt.

Abfrage- bzw. Aufladesequenzen

Die genannten Abfrage- bzw. Aufladesequenzen setzen sich bevorzugt aus einzelnen Lichtpulsen zusammen, die jeweils über Intensität, Wellenlänge und zeitlichem Pulsverlauf (Pulsform, Pulsdauer und Pulsabstand) festgelegt sind.

Innerhalb einer Abfolge mehrerer Pulse kann ein Puls durch seine Periodendauer gekennzeichnet werden, d.h. der Zeitdauer vom ersten Anstieg der Intensität bis zum Ende des folgenden Totzeitintervalls.

- Die Wellenlänge eines Auflade-bzw. Auslesepulses ist ein charakteristisches Maß für das Spektrum des Lichtes dieses Pulses und beispielsweise gegeben durch den Median oder durch die Lage des Maximum der spektralen Verteilung dieses Pulses.

- Die Intensität eines Auflade- bzw. Auslesepulses ist ein charakteristisches Maß für die Anzahl an Photonen, die aus diesem Puls am Messort auf die Probe treffen. Sie kann beispielsweise als zugehörige Signalstärke an einem geeigneten Detektor definiert werden.

- Mit Pulsform eines Auflade-bzw. Auslesepulses ist die Form des zeitlichen Intensitätsverlaufs dieses Pulses gemeint. Sie kann beispielsweise Rechtecks-, Sägezahn-, Cosinus-, Gauß-, Impuls-Form oder auch eine andere Form darstellen.

- Mit Pulsdauer eines Auflade- bzw. Auslesepulses ist ein charakteristisches Maß für die Zeit gemeint, während der Licht dieses Pulses auf den Messort trifft. Sie kann beispielsweise durch die zeitliche Halbwertsbreite oder den zeitlichen Abstand der Wendepunkte der steigenden und der fallenden Flanke des Pulses beschrieben werden.

**EP 3 469 559 B1**

- Der Pulsabstand eines Pulses zu seinem Nachfolger beschreibt die Zeitdauer, die zwischen dem Ende des einen und dem Beginn des nachfolgenden Pulses liegt, beispielsweise definiert durch die Zeitdauer zwischen abfallender Flanke des ersten und ansteigender Flanke des zweiten, nachfolgenden Pulses. Bei dieser Art der Definition kann ein Überlapp aufeinanderfolgender Pulse durch einen negativen Pulsabstand beschrieben werden.

Eine Unterscheidung oder Variation des Pulsabstands ist erst ab mindestens drei Pulsen möglich.

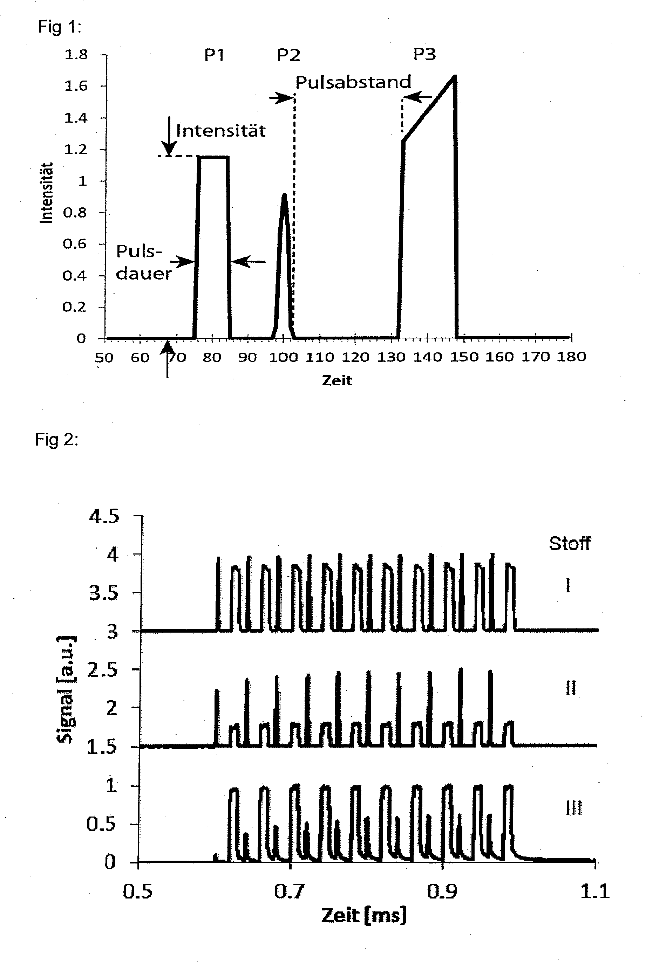

Figur 1 zeigt eine Auflade- bzw. Abfragesequenz aus drei Pulsen P1, P2, und P3, wobei beispielhaft drei Pulsformen dargestellt sind, Rechtecks-, Impuls-und abgewandelte Sägezahnform.

Erster Hauptaspekt: Beaufschlagen mit mindestens einer Abfragesequenz

Optische Speicherleuchtstoffe als gedächtnisbehaftete Stoffsysteme

Zu einem bestimmten Zeitpunkt liegt in den Fallenzentren des optischen Speicherleuchtstoffs eine Ladungsträgerverteilung vor, die kompatibel mit externen Einflüssen ist. "Kompatibel mit externen Einflüssen" bedeutet, dass ein Auslese- oder Aufladeprozess die Ladungsträgerverteilung beeinflusst oder dass die Ladungsträgerverteilung durch die Umgebungstemperatur und/ oder weitere Einflüsse wie mechanischer Druck, elektrische Felder und/ oder Strahlung, einschließlich Partikelstrahlung, beeinflusst wird. Wird der optische Speicherleuchtstoff nun mit einem Ausleseprozess ausgelesen, verlässt ein Teil der Ladungsträger die Fallenzentren und die Ladungsträgerverteilung in den Fallenzentren passt sich entsprechend an, so dass ein weiterer Lichtpuls auf eine veränderte Ladungsträgerverteilung wirkt.

Die aus den Fallenzentren angeregten Ladungsträger können, insbesondere aufgrund des Ausleseprozesses, auf die Leuchtzentren übergehen und dort die Emission von Lumineszenzstrahlung auslösen. Neben diesem gewünschten Prozess können Ladungsträger aber auch wiederum in (anderen) Fallenzentren gefangen werden und/oder strahlungslos relaxieren. Diese Pfade tragen zwar nicht zur Lumineszenzemission bei, sind aber für die Ladungsträgerverteilung in den Fallenzentren relevant.

Es ist insbesondere bevorzugt, dass die Ladungsträgerverteilung innerhalb des Speicherleuchtstoffs aufgrund des ersten Ausleseprozesses derart verändert wird, dass der zweite Ausleseprozess eine andere Wirkung aufweist als der erste Ausleseprozess. Durch die veränderte Ladungsträgerverteilung kann sich beispielsweise die Wahrscheinlichkeit eines Übergangs (entsprechend der quantenmechanischen Übergangsmatrix bzw. dem Absorptionsquerschnitt) von den Fallenzentren in die Leuchtzentren verändern. Für eine gleichbleibende Übergangsrate kann es somit zum Beispiel erforderlich sein, dass der zweite Ausleseprozess eine veränderte Intensität, eine veränderte Pulsform, eine veränderte Pulsbreite und/ oder eine veränderte Spektralform zur Erlangung desselben Messwerts wie bei dem ersten Ausleseprozess aufweist.

Bevorzugt ist es möglich, dass der erste Auslesemesswert unterschiedlich zum zweiten Auslesemesswert ist, wenn der erste Ausleseprozess gleich dem zweiten Ausleseprozess ist. Alternativ oder zusätzlich ist es möglich, dass der erste Auslesemesswert gleich dem zweiten Auslesemesswert ist, wenn der erste Ausleseprozess und der zweite Ausleseprozess unterschiedlich sind.

Von praktischer Bedeutung ist vor allem, dass die Anzahl der emittierten OSL-Photonen (also die Intensität der Emission) von der Anzahl gespeicherter Ladungsträger, der Anzahl eingestrahlter Auslesephotonen (bestimmt durch die Dauer und Intensität) und stoffspezifischen Eigenschaften (zum Beispiel Auslesespektrum, Ladungsdiffusion im Leitungsband, parasitäre Prozesse im OSL-Stoff) abhängt.

Liest man einen geladenen optischen Speicherleuchtstoff aus und zeichnet die emittierte Intensität über die Zeit auf, ergibt sich die Auslesekurve. Werden Intensität und Wellenlänge des auslesenden Lichtstrahls dabei konstant gehalten, klingt die zugehörige Auslesekurve für einen optischen Speicherleuchtstoff, der kein signifikantes Nachleuchten zeigt, mit der Zeit näherungsweise exponentiell ab, wobei die zugehörige Zeitkonstante direkt von der Ausleseintensität und stoffspezifischen Größen abhängt. Dies gilt insbesondere dann, wenn die Dauer des Auslesens die intrinsische Lebensdauer der Lumineszenz des Leuchtzentrums, die durch die Lebensdauer seines angeregten elektronischen Zustands gegeben ist, übersteigt.

Weist ein optischer Speicherleuchtstoff Nachleuchten auf, so überlagert das Nachleuchten die optisch stimulierte Lumineszenz und die Intensität in der Auslesekurve kann zunächst sogar ansteigen.

Somit hängt die Form der Auslesekurve jedes einzelnen Prozesses von der Anzahl gespeicherter Ladungsträger, der Intensität und Dauer des auslesenden Lichtes sowie von stoffspezifischen Eigenschaften ab.

Liest bevorzugt ein erster Lichtpuls einer bestimmten Wellenlänge während seiner Pulsdauer mit der zugehörigen Intensität den optischen Speicherleuchtstoff aus, so werden die gespeicherten Ladungsträger entsprechend reduziert und ein Teil dieser Ladungsträger erzeugt bei der Relaxation an den Leuchtzentren die emittierende Lumineszenz. Der nachfolgende Puls der Messsequenz liest also den optischen Speicherleuchtstoff aus, in dem bereits weniger gespeicherte Ladungsträger vorliegen.

Betrachtet man ein Prozesspaar aus einem ersten und einem nachfolgenden Prozess, hängt deshalb das Messergebnis, das durch den nachfolgenden Prozess erzielt wird von der Vorgeschichte ab, die durch den ersten Prozess aufgeprägt wurde. Bevorzugt ist das Prozesspaar ein Pulspaar. Beim Pulspaar können die Lichtpulse gleiche oder unterschiedliche Eigenschaften haben.

Wenn der nachfolgende Puls die gleichen Eigenschaften hat wie der erste Puls, so ist (wegen der im Vergleich zum ersten Puls reduzierten Anzahl gespeicherter Ladungsträger) die emittierte Lumineszenz geringer. Eine Messsequenz aus einer Folge gleicher Einzelpulse führt im Messsignal zu einer Auslesekurve, bei der die Einhüllende nahezu exponentiell abfällt (unter den Bedingungen, dass die stoff-intrinsische Lebensdauer und eventuelles Nachleuchten kurz gegen die Pulsdauer sind). Wie schnell die Einhüllende der Auslesekurve unter dieser Messsequenz abfällt, ist stoffspezifisch.

Der nachfolgende Puls kann sich aber in seinen Eigenschaften vom ersten Puls unterscheiden, wobei jeweils die gemessene Lumineszenzintensität beim nachfolgenden Puls größer, gleich oder kleiner als die unter dem ersten Puls sein kann:

1. Die Wellenlänge ist unterschiedlich. Ein solcher Puls adressiert eine andere Stelle des Auslesespektrums mit anderen Ausleseeffizienzen und prüft damit stoffspezifische Eigenschaften. Die Auslesekurve unter einer Messsequenz, die Pulse unterschiedlicher Wellenlänge benutzt, weicht im Allgemeinen deutlich von der Auslesekurve unter einer Messsequenz gleicher Pulse ab.

2. Die Intensität des nachfolgenden Pulses unterscheidet sich von der des ersten Pulses, wodurch die durch den nachfolgenden Puls hervorgerufene Lumineszenzintensität sich im Allgemeinen von der des ersten Pulses unterscheidet. Eine Messsequenz aus Pulsen unterschiedlicher Intensität weicht im Allgemeinen deutlich von der Auslesekurve unter einer Messsequenz gleicher Pulse ab.

3. Die Dauer des nachfolgenden Pulses unterscheidet sich von der des ersten Pulses, wodurch die zeitliche Verteilung der Lumineszenz während des nachfolgenden Pulses sich von der zeitlichen Verteilung der Lumineszenz während des ersten Pulses unterscheidet. Eine Messsequenz aus Pulsen unterschiedlicher Dauer weicht im Allgemeinen deutlich von der Auslesekurve unter einer Messsequenz gleicher Pulse ab.

4. Die Pulsform des nachfolgenden Pulses unterscheidet sich von der des ersten Pulses. Dies ist insbesondere dann ein wirksamer Parameter, wenn der Zeitverlauf der einzelnen Auslesepulse asymmetrisch ist (zum Beispiel ansteigende gegen fallende Intensität).

5. Der erste und der nachfolgende Puls unterscheiden sich in mehreren Eigenschaften, insbesondere in Wellenlänge und Intensität. Dabei kann die gemessene Lumineszenzintensität beim nachfolgenden Puls größer, gleich oder kleiner als die des ersten Pulses sein.

In speziellen Ausführungsformen können unterschiedliche Ausleseprozesse, bevorzugt unterschiedliche Auslesepulse verwendet werden,

• die jeweils für das spezielle Merkmal des OSL- Stoffs eine bekannte und untereinander in Beziehung stehende Wirkung auf das Lumineszenzsignal zeigen, und/ oder

• die für das spezielle Merkmal eines betreffenden speziellen OSL-Stoffs eine abgestimmte Wirkung aufweisen, sodass in der Zeitreihe des Lumineszenzsignals eine charakteristische Signatur entsteht, und/oder

• die insbesondere für das spezielle Merkmal, eines speziellen OSL-Stoffs in ihrer Reihenfolge vertauschbare Auswirkung auf das Lumineszenzsignal aufweisen.

Bei der Wahl der Ausleseprozesse, bevorzugt Auslesepulse können verschiedene Ziele verfolgt werden: Die Wellenlängen der Auslesepulse können derart auf das Auslesespektrum des optischen Speicherleuchtstoffs abgestimmt werden, um optimale Auslesegeschwindigkeit bzw. Signalintensität zu erhalten. Es können gezielt auch Wellenlängen gewählt werden, die kein Auslesesignal erzeugen oder lediglich eine klassische Lumineszenz ohne signifikante Wechselwirkung mit dem Speichersystem hervorrufen. Dies ist insbesondere relevant, wenn nicht nur ein einzelnes Echtheitsmerkmal, sondern ein ganzer Satz unterschiedlicher Echtheitsmerkmale zur Codierung eingesetzt wird. Die Echtheitsbewertung wird entsprechend angepasst.

Geeignete Abfragesequenz

Um geeignete Abfragesequenzen zu erzeugen, werden Reihenfolgen von Ausleseprozessen, bevorzugt Auslesepulsen ausgewählt, die eine spezifische Prüfung von charakteristischen Gedächtniseigenschaften des optischen Speicherleuchtstoffes ermöglichen. Dies geschieht durch eine geeignete Auswertung der jeweils durch die Messsequenz erzeugten Auslesekurve, gegebenenfalls für jeden Detektionskanal einzeln oder auch für zwei oder mehrere Detektionskanäle gemeinsam. Zusätzlich können die Messdaten hinsichtlich weiterer Stoffeigenschaften, zum Beispiel Eigenschaften der Anregungs- oder Emissionsspektren, der Lumineszenzlebensdauer oder Intensitäten ausgewertet werden.

Die Variationen der Abfragesequenzen haben den Vorteil einer genaueren Bestimmung der stoffspezifischen zeitlichen Dynamik und damit erschweren sie Fälschungen des Echtheitsmerkmals.

In einer ersten Ausführung ist die Abfragesequenz aus wenigstens einem Ausleseprozess zusammengesetzt und es wird kein Anregen des optischen Speicherleuchtstoffs mit wenigstens einem Präparationsschritt durchgeführt.

In einer weiteren Ausführung erfolgt das Beaufschlagen des optischen Speicherleuchtstoffs mit wenigstens einer Abfragesequenz ohne vorheriger Präparation eines definierten Ausgangszustands des optischen Speicherleuchtstoffs.

In einer zweiten Ausführung umfasst die Abfragesequenz wenigstens einen Ausleseprozess, der wenigstens eine mit der Zeit intensitätsmodulierte kontinuierliche Auslesung umfasst.

In einer bevorzugten Ausführung umfasst die Abfragesequenz wenigstens einen Ausleseprozess, der wenigstens einen Auslesepuls umfasst.

Insbesondere bevorzugt umfasst ein Ausleseprozess mindestens zwei, noch bevorzugter drei bis sechzehn Auslesepulse.

In einer dritten bevorzugten Ausprägung umfasst das Verfahren zwei Abfragesequenzen, die jeweils wenigstens einen ersten Ausleseprozess und einen zweiten Ausleseprozess umfassen, insbesondere bevorzugt drei bis fünf Abfragesequenzen.

In einer weiteren bevorzugten Ausführung werden die Abfragesequenzen sukzessive oder parallel oder zeitlich überlappend durchgeführt. Bevorzugt umfassen die Abfragesequenzen wenigstens einen Puls, noch bevorzugter drei bis sechzehn Pulse.

In einer vierten bevorzugten Ausführung werden mehrere Abfragesequenzen in unterschiedlicher Reihenfolge durchgeführt. Bevorzugt erfolgen die Abfrage-sequenzen hintereinander oder gleichzeitig oder zeitlich überlappend.

Besonders bevorzugt erfolgt die zweite Abfragesequenz nach der ersten Abfragesequenz oder die Abfragesequenzen werden in der Reihenfolge eins, zwei, drei durchgeführt.

In einer weiteren bevorzugten Ausführung, erfolgt der zweite Ausleseprozess in zeitlicher Reihenfolge nach dem ersten Ausleseprozess.

Besonders bevorzugt umfasst jeder Ausleseprozess mindestens zwei Auslesepulse, insbesondere bevorzugt erfolgt der erste Puls in zeitlicher Reihenfolge vor zweitem Puls. Dies führt zu unterschiedlicher Stimulation.

In einer alternativen bevorzugten Ausführung umfassen die Abfragesequenzen einen dritten und vierten Ausleseprozess.

Insbesondere bevorzugt erfolgen der dritte Ausleseprozess in zeitlicher Reihenfolge nach dem ersten Ausleseprozess und der vierte Ausleseprozess in zeitlicher Reihenfolge nach dem zweiten Ausleseprozess, wobei die Ausleseprozesse bevorzugt wenigstens einen Puls, noch bevorzugter drei bis acht Pulse umfassen.

In einer fünften bevorzugten Ausführung werden die Abfragesequenzen bei unterschiedlicher Wellenlänge der Ausleseprozesse und/oder Detektion der optischen Emission durchgeführt, wobei die Ausleseprozesse bevorzugt wenigstens einen Puls, noch bevorzugter drei bis acht Pulse umfassen.

In einer bevorzugten Ausprägung erfolgen Abfragesequenzen bei denen sich wenigstens ein erster Ausleseprozess und ein zweiter Ausleseprozess in wenigstens der Spektralform, d.h. der spektralen Aufbringung des Lichts des Ausleseprozesses oder Aufladeprozesses unterscheiden, wobei die Ausleseprozesse bevorzugt wenigstens einen Puls, noch bevorzugter drei bis acht Pulse umfassen.

In einer alternativen bevorzugten Ausprägung erfolgen Abfragesequenzen bei denen wenigstens ein erster Ausleseprozess und ein zweiter Ausleseprozess mindestens zwei spektral getrennte Auslesewellenlängen aufweisen, wobei die Ausleseprozesse bevorzugt wenigstens einen Puls, noch bevorzugter drei bis acht Pulse umfassen.

In einer sechsten bevorzugten Ausführung werden mehrere Abfragesequenzen durchgeführt, die sich in der örtlichen Aufbringung unterscheiden.

In einer siebten bevorzugten Ausführung werden mehrere Abfragesequenzen durchgeführt, wobei sich wenigstens ein erster Ausleseprozess und ein zweiter Ausleseprozess in der Intensität, in der Pulsform und/ oder in dem Pulsabstand des Ausleseprozesses unterscheiden, wobei die Ausleseprozesse bevorzugt wenigstens einen Puls, noch bevorzugter drei bis acht Pulse umfassen.

Besonders bevorzugt sind Abfragesequenzen aus mehr als zwei einzelnen Auslesepulsen, bevorzugt mehr als fünf Einzelpulsen zusammengesetzt, wobei die einzelnen Pulse vorzugsweise jeweils eine Pulsdauer von weniger als 1 ms, bevorzugt weniger als 0,1 ms und besonders bevorzugt weniger als 20 μs aufweisen.

In einer ersten Ausprägung ist die Abfragesequenz aus gleichen Auslesepulsen zusammengesetzt. Der Auslesepuls, der über Wellenlänge, Intensität und zeitlichen Verlauf (Pulsdauer und Pulsabstandsdauer oder Pulsdauer und Wiederholfrequenz) festgelegt ist, wird dazu mehrfach hintereinander wiederholt ausgeführt.

In einer zweiten bevorzugten Ausprägung ist die Abfragesequenz aus mindestens zwei unterschiedlichen Auslesepulsen zusammengesetzt, die in einer festgelegten Reihenfolge jeweils wiederholt ausgeführt werden. Die mindestens zwei Auslesepulse sind jeweils über die Parameterwellenlänge, Intensität, Pulsdauer und Pulsabstandsdauer festgelegt und die mindestens zwei Pulse unterscheiden sich in mindestens einem dieser Parameter.

In einer weiteren Ausprägung wird die Reihenfolge der Auslesepulse zufallsbestimmt.

In einer weiteren Ausprägung ist die Reihenfolge der Pulse willkürlich fest vorgegeben.

In einer bevorzugten Ausprägung wechseln sich in der Abfragesequenz die mindestens beiden Pulse wiederholt ab.

In einer weiteren bevorzugten Ausprägung wird in der Abfragesequenz jeder Auslesepuls jeweils mindestens zweimal durchgeführt, bevor zu einem anderen Puls gewechselt wird.

In einer weiteren bevorzugten Ausprägung ist die Abfragesequenz aus mindestens zwei Gruppen mit jeweils mindestens zweifacher Ausführung eines der mindestens zwei Auslesepulse zusammengesetzt, wobei aufeinanderfolgende Gruppen aus unterschiedlichen Auslesepulsen bestehen.

In einer besonders bevorzugten Ausprägung ist die Abfragesequenz aus mindestens zwei unterschiedlichen Auslesepulsen zusammengesetzt, die sich jeweils mindestens in ihren Wellenlängen unterscheiden, die zudem jeweils so in ihren Intensitäten und Pulsdauern aufeinander abgestimmt sind, dass sie in ihrer Wirkung auf den gewählten optischen Speicherleuchtstoff im Rahmen der Messgenauigkeit vertauschbar sind.

Bevorzugt sind die mindestens zwei Wellenlängen so gewählt, dass die erste Wellenlänge nahe des Maximums einer Bande des Auslesespektrums liegt und mindestens eine zweite Wellenlänge gegenüber der ersten Wellenlänge um mindestens eine Halbwertsbreite dieser Bande verschoben ist.

Insbesondere bevorzugt ist, dass die Wellenlänge des ersten und mindestens eines zweiten Auslesepulse unterschiedliche Banden des Auslesespektrums adressieren. Für den gewählten optischen Speicherleuchtstoff als Echtheitsmerkmal sind die beiden Auslesepulse in der Abfragesequenz vertauscht, was zur Echtheitsprüfung herangezogen wird. In einer ersten Ausprägung ist die Abfragesequenz unter diesen Bedingungen aus einer alternierenden Folge der beiden Auslesepulse aufgebaut.

In einer zweiten Ausprägung ist die Abfragesequenz aus mindestens zwei Gruppen mit jeweils mindestens zweifacher Ausführung eines der beiden Auslesepulse zusammengesetzt, wobei aufeinanderfolgende Gruppen aus unterschiedlichen Auslesepulsen bestehen.

In einer dritten Ausprägung ist die Reihenfolge der Auslesepulse in der Abfragesequenz willkürlich festgelegt.

In einer weiteren Ausprägung ist die Abfragesequenz aus mindestens zwei unterschiedlichen Auslesepulse zusammengesetzt, die sich in mindestens einem der Parameter Wellenlänge, Intensität und Pulsdauer unterscheiden, wobei der erste der mindestens zwei Auslesepulse mit einer ersten Frequenz m-fach und der mindestens zweite der beiden Auslesepulse mit einer zweiten Frequenz, die sich von der ersten unterscheidet, n-fach wiederholt wird, wobei n und m ganzen Zahlen größer drei sind.

In einer bevorzugten Ausprägung überlappen die mindestens zwei Auslesepulse in keiner der Wiederholungen, in einer alternativen Ausprägung überlappen die mindestens zwei Pulse mindestens teilweise in mindestens einem Teil der Wiederholungen innerhalb der Abfragesequenz.

In einer weiteren Ausprägung ist die Abfragesequenz aus mindestens zwei unterschiedlichen Auslesepulsen zusammengesetzt, die sich mindestens in ihrer Pulsdauer unterscheiden. Bevorzugt ist dabei, dass die Pulsdauer des ersten Auslesepulses mindestens doppelt so lange ist wie die des mindestens zweiten Pulses und insbesondere bevorzugt ist, dass die Pulsdauer des ersten Auslesepulses mindestens zehnmal so lang ist, wie die des mindestens zweiten Pulses.

In einer Ausprägung wechselt der erste Auslesepuls mit mindestens einer Gruppe aus mindestens fünf Wiederholungen eines weiteren der mindestens zwei Auslesepulse ab, wobei der lange Einzelpuls oder die Pulsgruppe den Anfang bilden kann. Bevorzugt wird dabei die Pulsdauer des ersten Pulses angepasst an die Summe der Pulsdauern der Auslesepulse der folgenden Gruppe aus mindestens fünf Wiederholungen eines weiteren der mindestens zwei Auslesepulse.

In einer anderen Ausprägung überlappen die ersten Auslesepulse und die mindestens zweiten Auslesepulse zumindest teilweise in mindestens einem Teil der Wiederholungen innerhalb der Abfragesequenz.

In einer weiteren Ausprägung umfasst die Abfragesequenz wenigstens einen dritten oder einen vierten Ausleseprozess, bevorzugt vier oder mehr Auslesepulse, insbesondere bevorzugt mindestens acht oder mindestens zehn.

In einer alternativen Ausprägung umfasst die Abfragesequenz einen dritten Auslesepuls, der in zeitlicher Reihenfolge nach dem ersten Auslesepuls und einen vierten Auslesepuls der in zeitlicher Reihenfolge nach dem zweiten Auslesepuls erfolgt, bevorzugt werden die Auslesepulse in einer festgelegten Reihenfolge jeweils wiederholt ausgeführt, besonders bevorzugt wird eine mindestens zweifache Wiederholung der jeweils zwei Auslesepulsgruppen ausgeführt.

In einer weiteren alternativen Ausprägung, wird über den ersten, zweiten, dritten Auslesemesswert und/ oder vierten Auslesemesswert ein Emissionsspektrum, eine Intensität, eine Wellenlänge und/ oder eine Abklingdauer der Emission des Speicherleuchtstoffs erfasst.

Geeignete Auslesespektren

In einer ersten Ausführung ist das Auslesespektrum des ausgewählten optischen Speicherleuchtstoffes strukturiert, bevorzugt enthält es mindestens eine Bande deren Maximum im Bereich 400 nm bis 2000 nm liegt und insbesondere bevorzugt weist diese mindestens eine Bande auf ihrer flacheren Flanke höchstens eine Halbwertsbreite (bestimmt als HWHM, half width half maximum) von 250 nm auf.

In einer weiteren bevorzugten Ausführung weist das Auslesespektrum des ausgewählten optischen Speicherleuchtstoffs mehr als eine Bande im Bereich 400 nm bis 2000 nm auf, wobei besonders bevorzugt ist, dass die Halbwertsbreiten der Banden (bestimmt als FWHM, full width at half maximum) höchstens 500 nm betragen.

In einer Weiterbildung der Erfindung liegt das Emissionsspektrum des optischen Speicherleuchtstoffs im Bereich 300 nm bis 2000 nm.

In einer bevorzugten Ausführung fällt das Emissionsspektrum des Speicherleuchtstoffs nicht vollständig mit dem Auslesespektrum des Speicherleuchtstoffs zusammen.

Zweiter Hauptaspekt: Beaufschlagen mit wenigstens einer Aufladesequenz

Um verschiedene Mitglieder einer Merkmalsserie universell aufzuladen, kann eine breitbandig emittierende Lichtquelle (Blitzlampe) eingesetzt werden. Die Aufladeeffizienz eines Stoffes bezüglich einer breitbandigen Beleuchtung unterscheidet sich typischerweise von der Effizienz einer schmalbandigen Beleuchtung (zum Beispiel durch eine Laserlinie). Eine breitbandige Beleuchtung kann spektrale Verschiebungen ausgleichen, die durch das Stoffdesign bzw. die Stoffauswahl bedingt werden. So lassen sich Stoffe in einer breitbandigen Anregung gleichstellen, welche unter schmalbandigen Beleuchtungen trennbar sind (zum Beispiel, weil für einen Stoff ein spezifischer Übergang getroffen wird).

Das Aufladespektrum beschreibt die spektrale Verteilung der Effizienz von Aufladevorgängen. Die Speichereffizienz variiert dabei mit der Wellenlänge. Das Aufladespektrum liegt in der Regel im hochenergetischen Teil des Anregungsspektrums der Photolumineszenz. Dabei können das Auflade- und das Anregungsspektrum unterschiedliche Verläufe aufweisen (Liu, Sci. Rep. 3,1554; DOI:10.1038/ srep01554 (2013)).

Insbesondere gibt es typischerweise eine Grenzwellenlänge, ab der ein Stoff nicht mehr signifikant aufgeladen, aber substantiell zur Photolumineszenz angeregt wird. Wählt man beispielsweise zwei Aufladeprozesse so, dass ein Beleuchtungsprozess bei der ersten Wellenlänge eine effiziente Aufladung bewirkt während bei der zweiten Wellenlänge das OSL- System nicht beteiligt ist, kann dies in einer Messsequenz zur Echtheitsprüfung genutzt werden: analog zum Zusammenhang von Ausleseeffizienz und Auslesekurve lässt sich die spektrale Aufladeeffizienz so anhand der Aufladekurve oder einer komplexen Auslesekurve anhand der Wirkung der unterschiedlichen Aufladeprozesse prüfen. Wählt man die Parameter zweier Aufladeprozesse so, dass sie nur für einen spezifischen Stoff gleiche Wirkung entfalten, lässt sich für diesen Stoff resultierende spezifische Kommutativität der Aufladeprozesse zur Echtheitsbewertung nutzen.

In einer bevorzugten Ausführung wird der optische Speicherleuchtstoff mit wenigstens einer Aufladesequenz und/oder mindestens einem Präparationsschritt eine Schwellenwertemission eingestellt. Die Schwellenwertemission kann durch Einstellung der Aufladesequenz bzw. Auflademenge angepasst werden. Bei der Schwellenwertemission zeigt die Emission des OSL-Stoffs bevorzugt ein definiertes Ausgangsignal, insbesondere eine definierte Intensität der optischen Emission unter einem definierten Ausleseprozess. Damit lassen sich präparierte definierte Ausgangszustände der OSL-Stoffe erzielen, so dass diese miteinander verglichen und somit unterschieden werden können.

Zwei Stoffe können auch aufgrund unterschiedlicher Aufladegeschwindigkeiten getrennt werden. In einer Ausprägung werden dazu Aufladesequenzen eingesetzt, die mehrere Aufladeprozesse, bevorzugt mehrere Aufladepulse, enthalten. Aus den zugehörigen Auslesesignalen wird die Aufladegeschwindigkeit des optischen Speicherleuchtstoffs bestimmt. Die Auslesesignale entsprechen der Emissionszeitreihe oder Emissionsserienzeitreihe bzw. der Auslesemesswert-zeitreihe.

In einer ersten Ausführung umfasst Schritt a) zwei Aufladesequenzen, die jeweils wenigstens einen ersten Aufladeprozess und einen zweiten Aufladeprozess umfassen.

In einer weiteren bevorzugten Ausführung werden die Aufladesequenzen sukzessive oder parallel oder zeitlich überlappend durchgeführt. Bevorzugt umfassen die Aufladesequenzen wenigstens einen Puls, noch bevorzugter drei bis acht Pulse.

In einer weiteren Ausführung umfasst eine Aufladesequenz wenigstens einen ersten Aufladeprozess einen zweiten Aufladeprozess, der zeitlich nach dem ersten Ausleseprozess erfolgt.

In einer alternativen Ausführung umfasst eine Aufladesequenz wenigstens einen dritten oder einen vierten Aufladeprozess, bevorzugt mindestens vier bis zwanzig insbesondere bevorzugt acht bis sechzehn.

In einer zweiten Ausführung umfasst eine Aufladesequenz mindestens ein Aufladeprozess, der sich gegenüber einem anderen Aufladeprozess in der Wellenlänge, in der Intensität, in der Pulsdauer, in der Pulsintervalldauer und/ oder in der Wellenlänge unterscheidet.

In einer bevorzugten Ausführung umfasst ein Aufladeprozess wenigstens eine mit der Zeit intensitätsmodulierte kontinuierliche Aufladung. Dadurch ergeben sich zeitliche Schwankungen in der Intensität der Aufladungsanregung, d.h. es erfolgt eine nicht-diskrete Aufladung.

In einer weiteren bevorzugten Ausführung umfasst ein Aufladeprozess wenigstens einen Aufladepuls, insbesondere bevorzugt zwei oder mehr Aufladepulse, noch bevorzugter drei bis acht oder vier bis zwanzig.

In einer weiteren Ausprägung werden unterschiedliche Pulsdauern der Aufladepulse ausgenutzt, um abzuschätzen, wie schnell ein Merkmal unter den gegebenen Beleuchtungsbedingungen aufgeladen wird.

In Messungen all dieser Ausprägungen kann direkt das Signal genutzt werden, das beim Aufladepuls anfällt. Außerdem kann ein Auslesepuls oder mehrere auch unterschiedliche Auslesepulse als probender Prozess eingesetzt werden, um die Effizienz des Aufladens zu prüfen.

Figur 2 zeigt unterschiedliche Aufladegeschwindigkeiten dreier Stoffe (Stoff I, Stoff II, Stoff III). Das Anwachsen des Signals unter Auslesepulsen (kurze Pulse) wird betrachet, wenn der Stoff wiederholt aufgeladen wird (längere Pulse). In der zugehörigen Sequenz erzeugt zunächst ein Auslesepuls ein Signal, danach folgt ein Aufladepuls.

Dieses Pulspaar wird zehnmal wiederholt, wobei der Auslesepuls den Effekt des vorlaufenden Aufladepulses misst. Aus den Maxima der Auslesepulse entsteht so eine bewertbare Kurve zur Aufladegeschwindigkeit dieser Stoffe. Hier erkennt man deutliche Unterschiede in der Wirkung der Aufladepulse auf die Stoffe I, II bzw. III: Während die Aufladepulse keine deutliche Wirkung auf Stoff I zeigen, wird für Stoff II eine deutliche Steigerung der Intensität der optischen Emission in Antwort auf den jeweils zugehörigen Ausleseprozess beobachtet. Bei entsprechender quantitativer Auswertung lassen sich auch die Stoffe II und III voneinander anhand ihres Aufladeverhaltens unterschieden.

Dritter Hauptaspekt: Beaufschlagen mit Abfrage- und Aufladesequenzen

Durch das Mischen von Auflade- und Abfragesequenzen können komplexere Auslesekurven erhalten werden. Dies hat den Vorteil einer erhöhten Sicherheit, da dieses Mischen von Auflade- und Abfragesequenzen schwer nachzustellen ist.

Um zusätzliche externe Einflüsse abzufangen, kann durch eine geeignete Aufladesequenz ein optischer Speicherleuchtstoff in eine Situation gebracht werden, in der diese Einflüsse kaum noch eine Rolle spielen.

In einer bevorzugten Ausführung wird hierfür eine geeignete Abfolge von Auslese- und Aufladepuls eingesetzt, bis anhand eines Signals zum Beispiel unter einem Auslesepuls festgestellt wird, dass eine Schwelle überschritten wurde. Dadurch können definierte Ausgangssignale eingestellt werden. So kann eine Vergleichbarkeit der optischen Speicherleuchtstoffe erreicht werden.

In einer weiteren bevorzugten Ausführung kann eine sogenannte thermalisierende Sequenz aus mehreren Auflade- und Abfragesequenzen (zum Beispiel auch randomisiert) eingesetzt werden, um die Kohärenz des Gedächtnisses zu zerstören, so dass anhand einer weiteren Prüfung nicht mehr nachvollziehbar ist, welcher Messsequenz das spezielle Merkmal vor dieser thermalisierenden Sequenz unterworfen war.

Hier liegt also typischerweise ein teilweise entleerter OSL- Stoff vor, im Gegensatz spezifisch präparierten oder sogar singulären Situationen.

In einer bevorzugten Ausführung umfasst das Verfahren einen weiteren Schritt h., wobei der optische Speicherleuchtstoff mit wenigstens einer thermalisierenden Sequenz beaufschlagt wird.

In einer ersten Ausführung wird der optische Speicherleuchtstoff mit mehreren Abfragesequenzen und mit mehreren Aufladesequenzen beaufschlagt.

In einer bevorzugten Ausführung erfolgt eine wiederholte und/oder jeweils alternierende Abfolge des wenigstens einen Aufladeprozesses und des wenigstens einen Ausleseprozesses, insbesondere bevorzugt umfassen die Prozesse jeweils mindestens einen Puls, d.h. ersten Aufladepuls, ersten Auslesepuls.

In einer weiteren bevorzugten Ausführung erfolgen mehr als zwei Abfolgen, besonders bevorzugt ist die Reihenfolge: Aufladeprozess/ Ausleseprozess/ Aufladeprozess/ Ausleseprozess, insbesondere bevorzugt umfassen die Prozesse jeweils mindestens einen Puls.

In einer alternativen bevorzugten Ausführung erfolgt mindestens eine 2-fach randomisierte (zufällige) Wiederholung der Aufladeprozesse/ Ausleseprozesse, insbesondere bevorzugt umfassen die Prozesse jeweils mindestens einen Puls.

In einer weiteren Ausprägung kann in einer Sequenz die Kombination aus Auflade- und Auslesepuls gesucht werden, unter der das Emissionssignal stationär wird. Dadurch können unterschiedliche Aufladegeschwindigkeiten abgefragt werden.

Auswertung und Echtheitsnachweis

Je nach eingesetzter Auflade- bzw. Abfragesequenz ergibt sich eine Auslesemesswertzeitreihe, die für den Echtheitsnachweis bewertet wird. Je nachdem, wie sich der ausgewählte optische Speicherleuchtstoff unter einer bestimmten Auflade- bzw. Abfragesequenz verhält und welche Eigenschaften durch diese Sequenz für den Echtheitsnachweis adressiert werden soll, müssen unterschiedliche Aspekte der Auslesemesswertzeitreihe ausgewertet werden. Es können auch verschiedene Echtheitsmerkmale mit mehreren Abfragesequenzen beaufschlagt werden.

Aus einer Auslesemesswertzeitreihe lässt sich eine Auslesekurve erstellen. Durch die Bestimmung der Form der Auslesekurve oder durch die Bestimmung von Parametern, bevorzugt bezüglich absoluter Intensitätskalibrierungen skalierungsinvarianten Parametern, die den zeitlichen Verlauf der Kurve beschreiben und Abgleich des Kurvenverlaufs oder der bestimmten Parameter mit den zu erwarteten Ergebnissen für bekannte Referenzspeicherleuchtstoffe ist das Erkennung der Echtheit eines optischen Speicherleuchtstoffs möglich.

Für bekannte Referenzspeicherleuchtstoffe sind Referenzauslesemesswertzeitreihen oder Referenzauslesemesswertserienzeitreihen in beispielsweise Look-up Tabellen hinterlegt. Durch einen Abgleich der erfassten Auslesekurvenform oder der erfassten Parameter erfolgt eine Zuordnung der optischen Speicherleuchtstoffe mithilfe der Look-up Tabelle. Dadurch können optische Speicherleuchtstoffe unterschieden werden und eine Bewertung der Echtheit des optischen Speicherleuchtstoffs erfolgen.

Besonders bevorzugt sind dabei Auswertungsmethoden, die für die Bewertung der Echtheit keinen definierten Ausgangszustand des optischen Speicherleuchtstoffes benötigen.

Echtheitsnachweis:

a) Form der Auslesekurve

Zum Echtheitsnachweis kann die Form der Auslesekurve direkt bewertet werden, indem sie mit einer Vorgabe oder einem Schätzer verglichen wird.

b) Parameter, die den zeitlichen Verlauf der Kurve beschreiben

Parameter die bevorzugt bewertet werden, sind das Verhältnis der Signalintensitäten, insbesondere zu Beginn und zu Ende der Pulsfolge, Mittelwert der Signalintensitäten ausgewählter Pulse, insbesondere bei alternierenden Sequenzen oder das Entleerungsverhältnis, das durch die Differenz der Signalintensität zu Beginn und Ende der Sequenz, insbesondere relativ zur Signalintensität zu Beginn der Sequenz gegeben ist. Weiterhin bevorzugte Parameter sind die Differenzen direkt aufeinanderfolgender oder in größerem zeitlichem Abstand aufeinander folgender Auslesemesswerte. Weiterhin bevorzugte Parameter sind die relativen Differenzen direkt aufeinanderfolgender oder in größerem zeitlichem Abstand aufeinander folgender Auslesemesswerte.

Bevorzugt wird durch die Auslesemesswertzeitreihe von mindestens zwei Auslesemesswerten eine Intensitätsrelation des ersten Auslesemesswerts zum zweiten und/oder gegebenenfalls folgenden Auslesemesswert des Speicherleuchtstoffs erfasst, um so die Auslesegeschwindigkeit des optischen Speicherleuchtstoffs zu bestimmen. Es kann das Intensitätsverhältnis zu verschiedenen Zeiten gebildet werden und als Maß für das charakteristische Zeitverhalten der Lumineszenz verwendet werden.

Bei spektraler mehrkanaliger Detektion lassen sich zudem Intensitätsverhältnisse unterschiedlicher Emissionsbanden und das jeweilige zeitliche Verhalten unter der gegebenen Messsequenz bestimmen.

Neben der gesamten Auslesekurve kann auch jeder Puls betrachtet werden. Das An- bzw. Abklingverhalten eines Einzelpulses gibt charakteristische Informationen über das Zeitverhalten des Leuchtzentrums sowie eventuell auftretendes Nachleuchten.

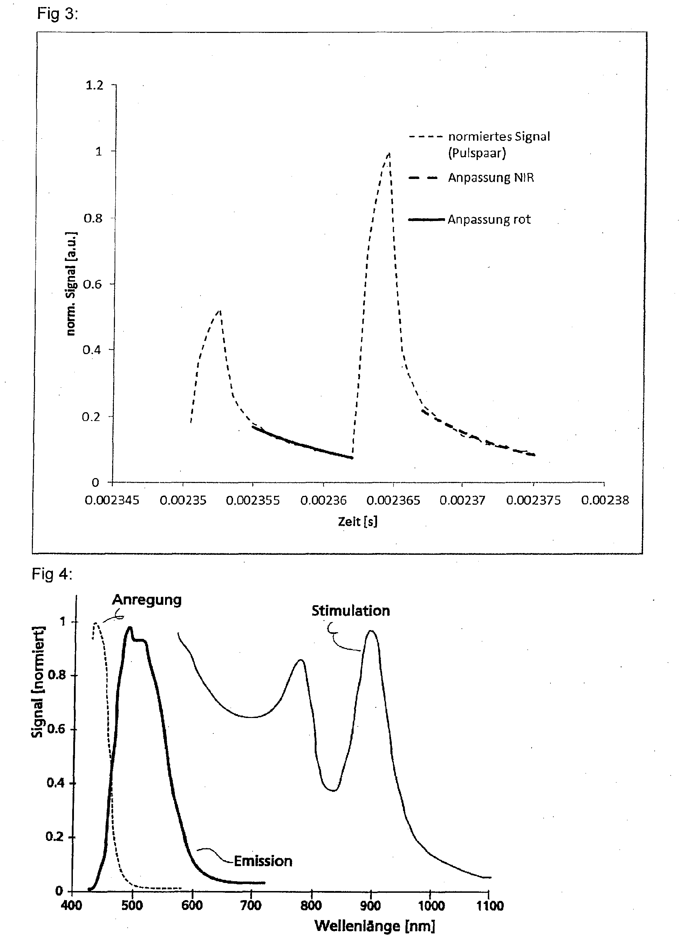

Figur 3 zeigt den normierter Signalverlauf unter einem Pulspaar (erst Puls "rot" gefolgt von Puls "NIR") zusammen mit exponentiellen Anpassung des Messsignals an den Teil der Auslesekurve, in dem jeweils der Auslesepuls aus und das Signal im Wesentlichen abgeklungen ist. Aus diesen Daten lässt sich als weitere Maßzahl der Exponent der Anpassung nutzen.

Bevorzugt ist die Abklingdauer der Emission eines Einzelpulses auf einen ersten Ausleseprozess so lange, dass die durch den ersten Ausleseprozess verursachte Emission die durch den zweiten Ausleseprozesses verursachte Emission überlagert.

Alternativ bevorzugt dazu ist die Abklingdauer der Emission eines Einzelpulses auf einen ersten Ausleseprozess so kurz, dass die durch den ersten Ausleseprozess verursachte Emission zu Beginn des zweiten Ausleseprozesses bereits im Wesentlichen abgeklungen ist.

Darüber hinaus kann aus der Auslesekurve auch die intrinsische Lumineszenzlebensdauer oder die persistente Lumineszenz (Nachleuchten) bestimmt werden. Insbesondere nimmt die Auslesekurve in Fällen, in denen die Lumineszenzlebensdauer (oder die Nachleuchtdauer) größer als der Pulsabstand ist, ungewöhnliche Formen mit zunächst kumulativ ansteigenden Intensitäten an.

Zum Echtheitsnachweis wird bevorzugt aus den Parametern, die den zeitlichen Verlauf der Kurve beschreiben, dem Verhältnis der Signalintensitäten, dem Mittelwert der Signalintensitäten oder das Entleerungsverhältnis, quantitativ eine charakteristische Gedächtniseigenschaft bestimmt.

Für ein Echtheitsmerkmal hängen diese Eigenschaften jeweils von der Art der Messung ab. Wegen der engen Verschränkung von Messablauf und charakteristischen Größe entsteht eine erhöhte Sicherheit, da für eine erfolgreiche Nachstellung die Merkmalszusammensetzung und der eingesetzte Messablauf (mit zeitlichen Abfolgen und Parametrisierungen) bekannt sein müssen.

Beispiele für charakteristische Gedächtniseigenschaften sind:

- Auslesegeschwindigkeit (Wie schnell werden Energiereserven geleert?) Im OSL-Stoff beschreibt diese Größe, wie schnell sich ein Stoff auslesen lässt bzw. wie schnell die gespeicherten Energiereserven geleert werden. Sie lässt sich als relative Abnahme der optisch stimulierten Lumineszenz von Auslesepuls zu Auslesepuls beschreiben oder als Ableitung der Auslesekurve. Vergleicht man die Auslesegeschwindigkeit zweier optischer Speicherleuchtstoffe unter derselben Messsequenz, so ergeben sich Unterschiede aus Materialeigenschaften der optischen Speicherleuchtstoffe wie ihrer Stimulierbarkeit unter diesen Bedingungen, Ladungstransporteigenschaften oder unterschiedlichen Wahrscheinlichkeiten dafür, dass die stimulierten Ladungsträger in (anderen) Fallenzentren gefangen werden.

- Aufladegeschwindigkeit (Wie schnell erfolgt die Aufladung?) Im OSL-Stoff beschreibt diese Größe, wie schnell bzw. effektiv sich ein Stoff aufladen lässt. Sie lässt sich als relative Zunahme der optisch stimulierten Lumineszenz von Aufladepuls zu Aufladepuls beschreiben oder als Ableitung der Aufladekurve. Vergleicht man die Aufladegeschwindigkeit zweier optischer Speicherleuchtstoffe unter derselben Messsequenz, so ergeben sich Unterschiede aus Materialeigenschaften der optischen Speicherleuchtstoffe.

- Gedächtnistiefe (Wie lange kann ein Ereignis in der Vorgeschichte zurückliegen, um noch das Ergebnis einer Messung signifikant zu beeinflussen?) Dies kann durch wiederholtes Anwenden einer Messsequenz erfolgen, die zu bestimmten Zeiten durch ein anderes ausgezeichnetes Messereignis ersetzt wird, beispielsweise durch einen starken Auslesepuls. In einer bevorzugten Ausprägung ist die Gedächtnistiefe klein (2 Zyklen), sodass die Auslesekurve möglichst nur von der unmittelbaren Vorgeschichte abhängt.

- Vertauschbarkeitsregeln (Wird eine Information durch eine andere überschrieben oder verändert?) Für den optischen Speicherleuchtstoff werden Auslesepulse so festgelegt, dass sie in ihrer Wirkung definiert unterscheidbar oder bevorzugt definiert ähnlich sind. Die Unterscheidbarkeit oder Ähnlichkeit kann über ein Unterscheidbarkeitsmaß (Vertauschbarkeitsmaß) bestimmt werden. Ein solches Maß beschreibt, wie sich die Auslesekurve ändert, wenn die Reihenfolge zweier Auslesepulse in der zugehörigen Messsequenz vertauscht wird.

In einer Ausprägung wird der betrachtete Puls mit einem Schätzwert verglichen, der sich aus dem Nachbarpulsen durch geeignete Verfahren (wie lineare Näherung oder Mittelwertbildung) ergibt.

In einer weiteren Ausprägung wird der betrachtete Puls mit einem Schätzwert verglichen, der sich aus einer zusätzlichen Messung ergibt.

In einer alternativen Ausprägung werden Systeme (Speicherleuchtstoff, Auslesepulse und Messsequenzen) mit definierter Unterscheidbarkeit bevorzugt, in einer weiteren bevorzugten Ausprägung Systeme, in denen Vertauschbarkeit erfüllt ist.

- Kontinuität des Gedächtnisses (Können Lücken in einem ansonsten kontinuierlichen Gedächtnis auftreten?)

Bei einem optischen Speicherleuchtstoff als Echtheitsmerkmal beschreibt diese Größe, ob bei einer zeitweiligen Unterbrechung einer ansonsten gleichmäßigen Messsequenz eine Auslesekurve entsteht, die sich kontinuierlich aus den beiden Teilstücken vor und nach der Unterbrechung zusammensetzen ließe. Lassen sich die Teilstücke vor und nach der Unterbrechung kontinuierlich zusammensetzen, wird das Gedächtnis als kontinuierlich und dieser Messsequenz bezeichnet. Treten bei einer solchen Zusammensetzung Stufen in der Auslesekurve auf, wird das Gedächtnis unter dieser Messsequenz als nicht kontinuierlich bezeichnet, wobei auch die Art und Form der Stufe (zu großes oder zu kleines Signal verglichen mit dem Soll, ansteigend oder verstärkt abfallend) charakteristisch ist. Ein mögliches Kontinuitätsmaß vergleicht unmittelbar nach der Unterbrechung die geschätzte Fortsetzung der Auslesekurve mit der unter der gegebenen Messsequenz tatsächlich gemessenen.

In einer besonders bevorzugten Ausprägung werden optische Speicherleuchtstoffe, Auslesepulse und Messsequenz so ausgewählt, dass das Gedächtnis des gewählten optischen Speicherleuchtstoffs unter den gewählten Auslesepulsen und Messsequenzen wesentlich kontinuierlich ist.

- Persistenz (Wie stabil ist das Gedächtnis über der Zeit? Verlischt die Erinnerung?) In OSL-Stoffen verändert sich die Fallenbesetzung mit der Zeit ("Fading"), da nichtstrahlende Relaxationspfade auch bei Raumtemperatur zugänglich sind.) Als mögliches Messverfahren kann nach einem Aufladepuls die Wartezeit zum ersten Puls der nachfolgenden Messsequenz variiert werden. Aus dem Vergleich der Auslesekurven für unterschiedliche Wartezeiten lassen sich geeignete Maße der Persistenz wie die Intensitätspersistenz (Stabilität des Signalmaximums der Auslesekurve gegenüber der Wartezeit) oder Geschwindigkeitspersistenz (Stabilität der Auslesegeschwindigkeit gegenüber der Wartezeit) bestimmen.

In einer Ausprägung werden OSL-Stoffe und Aufladepulse gewählt, die eine lange Persistenz des Gedächtnisses gewährleisten, um Aufladen und Auslesen zeitlich und räumlich zu entkoppeln.

In einer zweiten Ausprägung werden Echtheitsmerkmal und Aufladepulse gewählt, die eine kurze Persistenz des Gedächtnisses gewährleisten, um Aufladen und auslesen zeitlich und räumlich zu koppeln und damit eine maschinelle Bearbeitung notwendig zu machen.

In einer bevorzugten Ausführung sind OSL- Stoffe und Aufladepulse so gewählt, dass die Persistenz des Gedächtnisses an die Bearbeitungsgeschwindigkeit angepasst ist, d.h., dass die Persistenz des Gedächtnisses so einge-stellt ist, dass ab einer Wartezeit von 50 $\mu$s, besonders bevorzugt ab einer Wartezeit von 20 $\mu$s, nach dem Aufladen für eine feste Messsequenz das Gedächtnis stabil ist.

- Sensitivität (Wie variiert das Gedächtnis mit den Parametern eines Stimulus?) Bei einem OSL-Stoff ändert sich die Effizienz der Messung mit der Wellenlänge, d.h. es gibt ein Auslese- bzw. Aufladespektrum. Alternativ kann auch die Abhängigkeit der der optisch stimulierten Lumineszenz von der auslesenden Intensität gemessen werden.

In einer Ausprägung werden OSL-Stoffe gewählt, die ein Auslesespektrum mit mindestens einer ausgeprägten spektralen Struktur die in der Stimulationseffizienz mit der Wellenlänge variierend ausgebildet ist, aufweisen, wobei das Auslesespektrum mindestens ein lokales Minimum aufweist, bei dem die Stimulationseffizienz im Vergleich zu den flankierenden Maxima um mindestens 10% reduziert ist.

In einer bevorzugten Ausprägung ist die Stimulationseffizienz im Vergleich zu den flankierenden Maxima um mindestens 30% reduziert, wobei ein lokales Minimum bedeutet, dass die Intensität davon ausgehend sowohl zu größeren als auch zu kleineren Wellenlängen hin zunimmt.

In einer zweiten Ausprägung werden OSL-Stoffe gewählt, die ein Aufladespektrum mit mindestens einer ausgeprägten spektralen Struktur, die in der Aufladeeffizienz mit der Wellenlänge variierend ausgebildet ist, aufweisen, wobei das Auslesespektrum mindestens ein lokales Minimum aufweist, bei dem die Aufladeeffizienz im Vergleich zu den flankierenden Maxima um mindestens 10% reduziert ist

Assoziationsregeln: Assoziativität beschreibt wie verschiedene Messprozesse bei gleichzeitiger oder aufeinander folgender Einwirkung das Gedächtnis beeinflussen im Vergleich zu der Situation, in der jeweils nur einer der Messprozesse wirkt. Beispielsweise hängt die Lichtemission eines optischen Speicherleuchtstoffs davon ab, ob zwei unterschiedliche, auslesende Messprozesse hintereinander ausgeführt werden oder zeitlich überlappen.

- Gedächtnisstärke: Die Gedächtnisstärke beschreibt, wie stark ein Messprozess einen nachfolgenden beeinflusst. Für ein gedächtnisbehaftetes Merkmalssystem lässt sich eine Effizienz $\eta$ definieren, $S(P1) = \eta\, S(P1 \circ P1)$, die gegebenenfalls auch als Funktion weiterer Parameter aufgefasst werden kann. Für ein gedächtnisloses System ist $\eta = 1$. Auch komplexere Maßzahlen für die Gedächtnisstärke sind denkbar, indem beispielsweise nicht aufeinanderfolgende sondern weiter auseinanderliegende Prozesse verglichen werden. Bei n-facher Wiederholung von P1 (bezeichnet als $P1^n$ ) ergibt sich so $S(P1) = \eta_n\, S(P1^n)$ oder mit Normierung $nS(P1) = \eta_n\, S(P1^n)$. Statt direkt Messwerte eines Messprozesses zu verwenden, können Messwerte mehrerer Messprozesse auch zuvor verrechnet (beispielsweise gemittelt) werden. Dies kann insbesondere sinnvoll sein, wenn eine ausgezeichnete Messprozessfolge eingesetzt werden soll.

- Sättigungsverhalten: Um zu beschreiben, inwieweit das gedächtnisbehaftete System sättigbar ist, wird über geeignete Abfolgen von Messprozessen festgestellt, unter welchen Bedingungen das System sein Gedächtnis verliert, da in einem Sättigungszustand das Systemverhalten pfadunabhängig wird. Das Sättigungsverhalten beschreibt somit die Art und Weise wie der Sättigungszustand erreicht wird und somit das Gedächtnis keine Informationen zusätzlich aufnehmen kann.

- Latenz: Die Gedächtniseigenschaft Latenz bezieht sich auf die Verzögerung zwischen dem Zeitpunkt wann ein Messprozess wirkt und dem Zeitpunkt, wann die Wirkung in der Messhistorie sichtbar wird. Dies ist insbesondere in solchen Fällen eine wichtige Gedächtniseigenschaft, in der physikalische Eigenschaften über kaskadierte Vorgänge verändert werden (beispielsweise bei der Lumineszenz durch Energieübertrag von einem Sensitizer auf das Leuchtzentrum eines Luminophors).

- Isolation: Die Isolation beschreibt die Stabilität des Werts der Gedächtniseigenschaft gegenüber der Umwelt (beispielsweise eine Arbeitstemperatur oder anliegende elektrische Felder für ein optisch stimulierbares Merkmalssystem, oder gegebenenfalls gegenüber chemische Umgebung oder Ankopplung an ein Wärmebad). Bevorzugt ist das Merkmalssystem im Nachweisverfahren isoliert gegen die Umwelt und nur durch Messprozesse beeinflussbar.

- Spezifität: Mit Spezifität wird beschrieben, wie Messprozesse eines Typs im Vergleich zu einem anderen Typ wirken. Im Gegensatz zu Sensitivität, welche die Wirksamkeit eines Messprozesses bei variierenden Parametern beschreibt, vergleicht Spezifität die Wirkung kategorisch unterschiedlicher Messprozesse. Ist beispielsweise ein gedächtnisbehaftetes Merkmalssystem sensitiv gegenüber optischen und thermischen Stimuli (beispielsweise ein System, das sowohl optisch stimulierte Lumineszenz also auch Thermolumineszenz aufweist), so beschreibt Spezifität wie sich die beiden Messprozesstypen in ihren Wirkungen vergleichen. Beispielsweise kann die Messwertänderung unter jeweils wiederholten Messprozessen eines jeden Typs miteinander in Beziehung gesetzt werden. Eine Normierung auf die Dauer der Messprozesse, die Anzahl der Messprozesse oder die eingetragene Energie ist dabei hilfreich.

Referenzbibliothek

Zum Absicherungssystem gehören typischerweise mehrere optische Speicherleuchtstoffe, für die jeweils mehrere Auflade- bzw. Abfragesequenzen hinterlegt sind, die auf einen oder auch mehreren unterschiedlichen Typen von Messvorrichtungen abgestimmt sind, so dass der Echtheitsnachweis jeweils angepasst und gleichzeitig spezifisch durchgeführt werden kann.

Für einen ausgewählten, optischen Speicherleuchtstoff lässt sich eine Vielzahl an Auflade- bzw. Abfragesequenzen für den Echtheitsnachweis definieren. Dies ist insbesondere relevant, wenn mehrere unterschiedliche Messvorrichtungen zum Einsatz kommen, die sich beispielsweise in den Wellenlängen der eingesetzten Lichtquellen unterscheiden. Auch bevorzugt ist es, wenn die Ergebnisse unter einer ersten Auflade- bzw. Abfragesequenz für den Echtheitsnachweis unter einer zweiten, von der ersten verschiedenen, Auflade- bzw. Abfragesequenz herangezogen werden (als Schätzer und/ oder Referenz, beispielsweise zur Bewertung von Vertauschbarkeiten).

Außerdem lassen sich Auflade- bzw. Abfragesequenzen definieren, unter denen eine ganze zugehörige Gruppe optischer Speicherleuchtstoffe echt erkannt wird. Wird zum Beispiel für eine Währung eine Gruppe optischer Speicherleuchtstoffe ausgewählt, wobei jede Denomination einen anderen optischen Speicherleuchtstoff enthält, so können Sequenzen definiert werden, die zur Echtheitsprüfung aller Denominationen gleichzeitig herangezogen werden und es können Auflade- bzw. Abfragesequenzen spezifisch für eine Denomination definiert werden.

Diese Vorgehensweise erlaubt eine hierarchische Strukturierung der Banknotenbewertung von Qualitätssicherung bis hin zur Echtheitsbewertung einer einzelnen Ausgabe einer Denomination bzw. spezielle Präparationen.

In einer bevorzugten Ausprägung umfasst eine Referenzbibliothek solche Sequenzen, die zur Echtheitsbewertung eines gewählten optischen Speicherleuchtstoffs mit einer gewählten Messvorrichtung herangezogen werden können.

In einer weiteren bevorzugten Ausprägung umfasst die Referenzbibliothek Messparameter, die geeignet sind, in relevant diskriminierenden Echtheitsnachweisen für verschiedene, zu einem OSL-Stoff gehörende Merkmale eingesetzt zu werden.

Bevorzugt wird für die Echtheitsbewertung des gewählten Echtheitsmerkmals auf der gewählten Messvorrichtung mindestens eine Auflade- bzw. Abfragesequenzen aus dieser Referenzbibliothek verwendet.

Insbesondere bevorzugt werden für die Echtheitsbewertung des gewählten Echtheitsmerkmals auf der gewählten Messvorrichtung mehr als eine Auflade- bzw. Abfragesequenzen aus dieser Referenzbibliothek verwendet.

In einer alternativen Ausprägung umfasst die Referenzbibliothek Look-up Tabellen die geeignet sind, in relevant diskriminierenden Echtheitsnachweisen für verschiedene, zu einem OSL-Stoff gehörende Merkmale eingesetzt zu werden

Bevorzugt sind Wertdokumente mit mindestens einem Echtheitsmerkmal mit einem erfindungsgemäßen optischen Speicherleuchtstoff.

Insbesondere bevorzugt sind Wertdokumente, die mehrere unterschiedliche Echtheitsmerkmale aufweisen. Das Verfahren zum Prüfen der verschiedenen Echtheitsmerkmale umfasst mehrere verschiedene Abfragesequenzen und/oder Aufladesequenzen.

Figuren

Die Erfindung wird nachstehend in Verbindung mit den Fig.1 bis Fig. 12 beschrieben. In den Figuren zeigen:

Figur 1: eine Messsequenz aus drei Pulsen P1, P2, und P3, wobei beispielhaft drei Pulsformen dargestellt sind, Rechtecks-, Impuls- und abgewandelte Sägezahnform;

Figur 2: unterschiedliche Aufladegeschwindigkeiten dreier Stoffe (Stoff I, Stoff II, Stoff III);

Figur 3: Normierter Signalverlauf unter einem Pulspaar (erst Puls "rot" gefolgt von Puls "NIR") zusammen mit exponentiellen Anpassung des Messsignals;

Figur 4: Anregungs-, Emissions- und Auslesespektrum von Stoff I;

Figur 5: Anregungs-, Emissions- und Auslesespektrum von Stoff II;

Figur 6: Anregungs-, Emissions- und Stimulationsspektrum von Stoff III;

Figur 7: Messsequenz 16(Q),16-fach wiederholtes Auslesen mit Auslesepuls Q und die zugehörige Auslesekurve für Stoff I zusammen mit der exponentiellen Anpassung an die Einhüllende;

Figur 8: Stoff I unter der alternierenden Sequenzabfolge der 12 roten bzw. NIR-Lichtpulse 12(rot NIR) und die Auslesekurve;

Figur 9: Stoff I die Wert der Signalmaxima zu jedem Puls zur Sequenz 12(rot NIR);

Figur 10 a-c Beispiele zur Vertauschbarkeit:
1. Reihe-Stoff I, 2. Reihe-Stoff II, 3. Reihe-Stoff III, Zusätzlich sind jeweils die maximalen Signalamplituden für jeden Auslesepuls markiert (Rauten);

Figur 10a: Verwendete Messsequenzen 8(RR*), Auslesekurven für Stoff I-III;

Figur 10b: Verwendete Messsequenz 16R, Auslesekurven für Stoff I-III;

Figur 10c: Verwendete Messsequenz 16R*; Auslesekurven für Stoff I-III;

Figur 11 Vergleich des Unterscheidbarkeitmaßes U für Stoff I, Stoff I und Stoff III berechnet unter den Sequenzen ((R R*), 16R und 16R*;

Figur 12 Vergleich des einseitigen und gleichmäßigen Abstands für Stoff I, Stoff II und Stoff III als Nachweis der Vertauschbarkeit: Nur für Stoff I weisen beide Maße kleine Werte auf. Für Stoff I sind also die Auslesepulse R und R* auch auf diesen Maßen vertauschbar.

Ausführungsbeispiel 1:

Stoff I: Strontiumsulfid dotiert mit Kupfer und Bismut

Herstellung

19,93g $SrCO_3$, 0,03g $Bi_2O_3$ und 0,01g CuS wurden sorgfältig gemischt und in einen Korund-Tiegel gegeben. Die Mischung wurde mit 24 g einer 1:1 Mischung aus elementarem Schwefel und $Na_2CO_3$ überschichtet und mit einem Deckel abgedeckt. Anschließend wurde das Material 6h bei 900°C geglüht. Das gesinterte Material wurde zerkleinert und in einer Schwingmühle gemahlen. Das fertige Produkt liegt nach einem abschließenden Temperierungsschritt (12h bei 550°C) vor. Die zugehörigen Spektren sind in Figur 4 dargestellt.

Stoff II: Strontiumsulfid dotiert mit Europium und Samarium

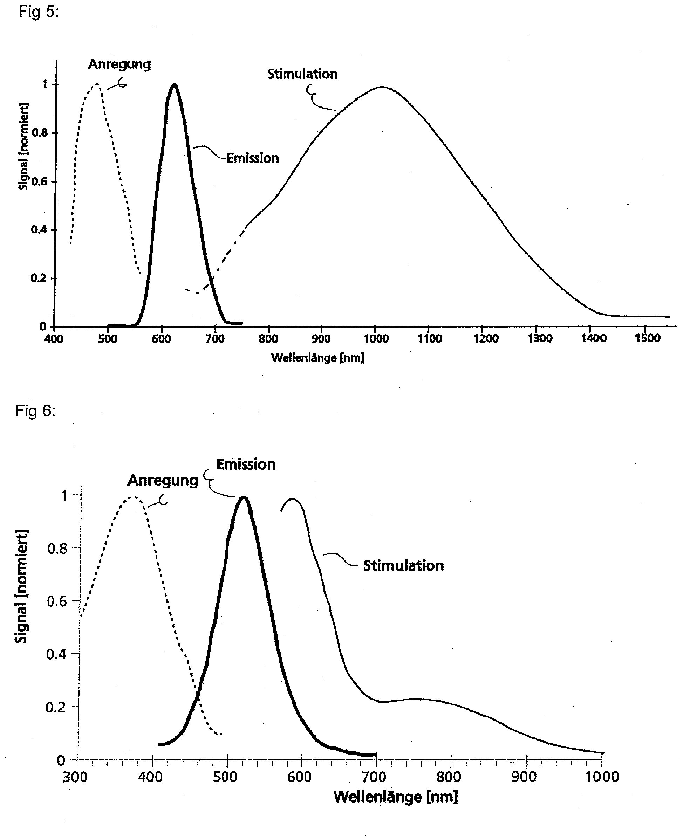

Präparation in Analogie zu Stoff I. Die zugehörigen Spektren sind in Figur 5 dargestellt.

Stoff III: Strontiumaluminat dotiert mit Europium und Thulium

Präparation folgt Katsumata, T., et al. Trap Levels in Eu-doped SrAl2O4 Phosphor Crystals Co-Doped with Rare-Earth Elements. J. A,. Ceram. Soc. 2006, Bd. 89, 3, S. 932-936. Die zugehörigen Spektren sind in Figur 6 dargestellt.

Ausführungsbeispiel 2: Messsequenz, 16-fach wiederholtes Auslesen mit Auslesepuls Q, 16(Q)

Im ersten Beispiel wird der angeregte Stoff I (Anregung erfolgte mit einem blauen Lichtpuls) 16-fach wiederholt mit demselben Auslesepuls (bezeichnet als "Q") ausgelesen und das auftretende Signal im Bereich von 490 nm bis 550 nm mit einer Avalanche-Photodiode bei 2 MHz Abtastfrequenz gemessen und als Auslesekurve aufgezeichnet. Die Parameter, die den Auslesepuls beschreiben, sind in der folgenden Tabelle zusammengefasst.

Tabelle 1 Parameter des Auslesepulses "rot"

| Parameter | Auslesepuls Q |
|---|---|
| Wellenlänge der Laserdiode | 638 nm |
| Strom | 500 mA |
| Pulsdauer | 4 $\mu$s |
| Pulsabstand | 6 $\mu$s |

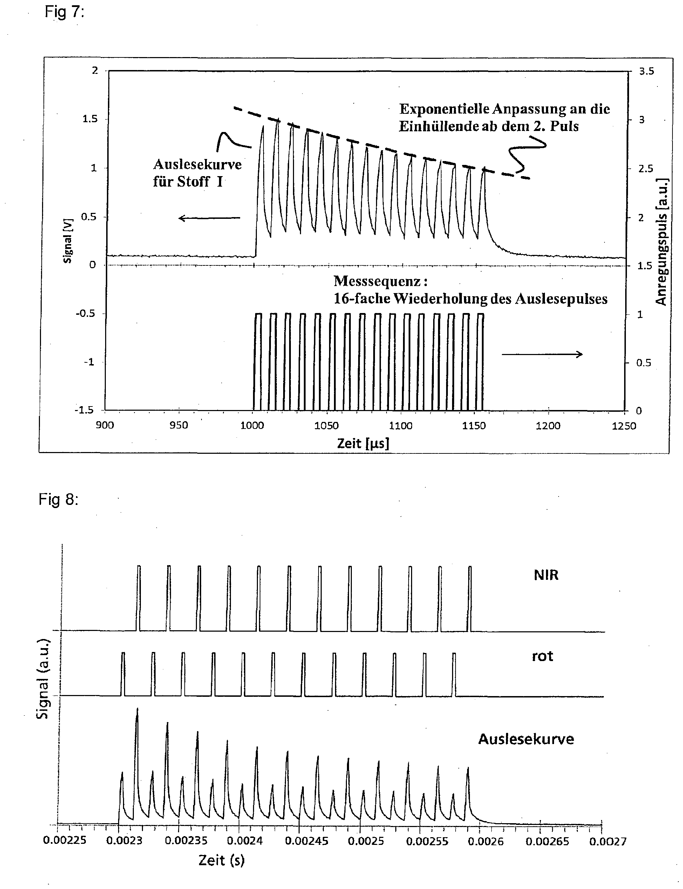

In Figur 7 ist die Pulsfolge der Auslesepulse (vertikale Achse rechts) und die Auslesekurve (vertikale Achse links) gegen die Zeit dargestellt. Der Aufladepuls (Laserdiode 450 nm, Strom 800 mA, Dauer 200 $\mu$s) erfolgte außerhalb der dargestellten Daten (zur Zeit t=0). In die Messdaten ist zusätzlich die exponentielle Anpassung an die Einhüllende ab dem 2. Puls als gestrichelte Linie eingetragen. Stoff I weist zudem ein gewisses Nachleuchten auf, das im Signalanstieg vom ersten auf den zweiten Puls der Pulsfolge sichtbar wird. Dieses Nachleuchten überlagert mit dem OSL-Signal. Dies ist eine sehr spezifische Eigenschaft des hier beschriebenen Systems aus Stoff I, der Messvorrichtung sowie der verwendeten Messsequenz, die auf der starken Verschränkung dieser Komponenten des Echtheitssystems beruht. Dies wird vorteilhaft zur Echtheitsbewertung des markierten Gegenstands herangezogen.

Zur Auswertung der Auslesekurve kann die Lebensdauer aus der exponentiellen Anpassung an die Einhüllende herangezogen werden, hier beträgt dieser Wert 341.3 $\mu$s. Außerdem kann das Entleerungsverhältnis $\eta$ herangezogen werden, das hier über die Differenz der maximalen Signalintensität des a-ten Pulses zu Beginn S(a) und des b-ten Puls gegen Ender der Sequenz S(b) gewichtet mit der Summe dieser Intensitäten definiert wird, $\eta = \frac{S(a) - S(b)}{S(a) + S(b)}$. Für a=2, b=15 ergibt sich im dargestellten Fall der Wert $\eta$=0.198.

Weiterhin kann zur Auswertung die exakte Form der Auslesekurve mit einer Referenzkurve verglichen werden oder selektiv weitere charakteristischen Aspekte der Kurve wie z.B. die An- oder Abklingzeiten der Intensitäten der einzelnen Pulse oder der jeweilige Nachleuchtanteil mit entsprechenden Referenzwerten verglichen werden.

Ausführungsbeispiel 3: Messsequenz, alternierendes Auslesen 12(rot NIR)

Im diesem Beispiel wird der geladene Stoff I der Sequenz 12(rot NIR) ausgesetzt und das auftretende Signal im Bereich von 500 und 550 nm gemessen: anfangs wird der Stoff mit dem Prozess W aufgeladen (der Aufladepuls endet zum Zeitpunkt t=300$\mu$s), nach einer Wartezeit (Delay, 2ms) wird zuerst mit den Prozess rot, dann mit dem Prozess NIR ausgelesen. Die Wartezeit stellt sicher, dass kein Nachleuchten zum Signal beiträgt. Eine andere (insbesondere kürzere) Wartezeit ist möglich, führt aber wegen des Nachleuchtens und anderer Relaxationseffekte zu einer anderen Auslesekurve. Letztlich stellt eine Messsequenz mit anderer Wartezeit eine andere Messsequenz dar. Diese Abfolge der Auslesepulse wird 12 Mal wiederholt. Die Prozesse sind in Tabelle 2 definiert und in Figur 8 dargestellt. Beispielhaft erfolgt die Echtheitsanalyse aufgrund mehrerer Maßzahlen.

Tabelle 2 Parameter des Aufladepulses W und der Auslesepulse "rot" und "NIR"

| | Prozesse und Parameter | | |
|---|---|---|---|
| | W | rot | NIR |
| Wellenlänge | 455 nm | 638 nm | 853 nm |

(fortgesetzt)

| | Prozesse und Parameter | | |
|---|---|---|---|
| | W | rot | NIR |
| Strom | 1000 mA | 800 mA | 1000 mA |
| Rel. Intensität nach Abschwächer | 100% | ca. 40% | 100% |
| Pulsdauer | 80 $\mu$s | 2.5 $\mu$s | 2.5$\mu$s |
| Pulsabstand | 2ms | 11.25$\mu$s | 11.25$\mu$s |

Die in dieser Erfindung als Echtheitsmerkmal verwendeten Speichereigenschaften lassen sich anhand der Auslesekurve bestimmen. Dazu werden beispielsweise die Signalmaxima (bzw. das Integral des Signals für jeden Puls) der Prozesse rot und NIR ermittelt und als Zeitreihe dargestellt:

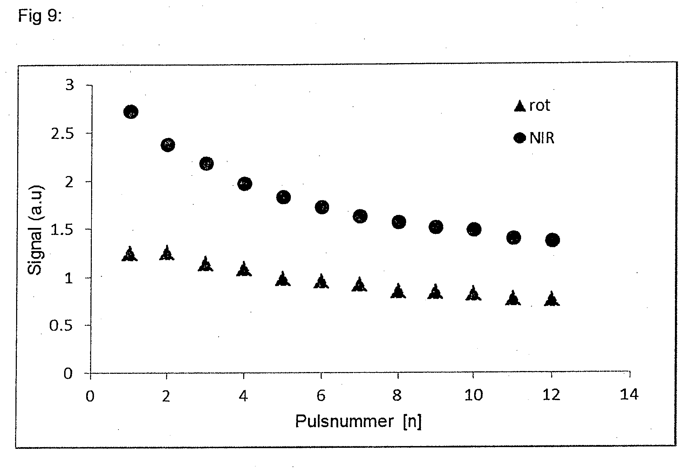

Wie in Figur 9 sichtbar ergeben sich für jeden der Prozesse abfallende Kurven. Die Größen rot(n) bzw. NIR(n) bezeichnen das maximale Signal, die Größen sum_rot(n) bzw. sum_NIR(n) das integrierte Signal zugehörig zur n. Anwendung des jeweiligen Prozesses. Die Tabelle 3 fasst einige mögliche erfindungsgemäße Maßzahlen und die zugehörigen Ergebnisse in diesem Beispiel zusammen.

Tabelle 3 Beispiele für charakteristische Maßzahlen und deren Auswertung für Stoff I

| | Ergebnis | Bemerkung |
|---|---|---|
| $$\gamma_{rot} = \frac{rot(1) - rot(12)}{rot(12)}$$ | 0.6 | Entleerungsverhältnis für den Auslesepuls "rot" |
| $$\gamma_{NIR} = \frac{NIR(1) - NIR(12)}{NIR(12)}$$ | 1.0 | Entleerungsverhältnis für den Auslesepuls "NIR" |
| $$b = \frac{1}{11} \sum_{n=2}^{12} \frac{NIR(n)}{rot(n)}$$ | 1.83 | Mittelwert der Signalintensitätsverhältnisse der beiden Ausleseprozesse "rot" und "NIR". Das erste Pulspaar wird ignoriert um eventuelles Einschwingverhalten abzufangen. Das Verhältnis NIR(n)/rot(n) liegt für n>2 nahe bei 1.83 innerhalb von $\pm$5% Abweichung. |
| $$B = \frac{1}{11} \sum_{n=2}^{12} \frac{sum\_NIR(n)}{sum\_rot(n)}$$ | 1.66 | Mittelwert des Verhältnisses der über den jeweiligen Puls integrierten Signalintensitäten der beiden Ausleseprozesse "rot" und "NIR". Das erste Pulspaar wird ignoriert um eventuelles Einschwingverhalten abzufangen. Das Verhältnis sum_NIR(n)/sum_rot(n) liegt für n>2 nahe bei 1.66 innerhalb von $\pm$5% Abweichung. |
| $$d = \frac{NIR(2) - NIR(12)}{rot(2) - rot(12)}$$ | 2.0 | Verhältnis der Signalintensitätsdifferenzen der beiden Ausleseprozesse "rot" und "NIR". Das erste Pulspaar wird ignoriert um eventuelles Einschwingverhalten abzufangen. |
| $$D = \frac{NIR(2) - rot(12)}{rot(2) - NIR(12)}$$ | -15.2 | Ein mögliches Maß für die Unterschiedlichkeit der Wirkung der beiden Ausleseprozesse "rot" und "NIR". Das erste Pulspaar wird ignoriert um eventuelles Einschwingverhalten abzufangen. |

Neben der gesamten Auslesekurve kann auch jeder Puls betrachtet werden. Das An- bzw. Abklingverhalten eines Einzelpulses gibt charakteristische Informationen über das Zeitverhalten des Leuchtzentrums sowie eventuell auftretendes Nachleuchten. Figur 3 zeigt den normierten Signalverlauf unter einem Pulspaar rot/NIR, d.h. erst Puls "rot" gefolgt von Puls "NIR" zusammen mit exponentiellen Anpassungen des Messsignals an den Teil der Auslesekurve, in dem jeweils der Auslesepuls aus und das Signal im Wesentlichen abgeklungen ist. Aus diesen Daten lässt sich als weitere Maßzahl der Exponent der Anpassung nutzen. Alternativ können Intensitätsverhältnisse zu verschiedenen Zeiten gebildet werden und als Maß für das charakteristische Zeitverhalten der Lumineszenz verwendet werden.

Tabelle 4 Beispiele für eine charakteristische Maßzahl, die sich auf Lumineszenzabklingzeiten und Nachleuchten stützt und deren Auswertung für Stoff I

| | Ergebnis | Bemerkung |
|---|---|---|
| Exponentielle Anpassung an die auf das Maximum von NIR normierten Signalpulse, ab einem Abstand von 2.5$\mu$s vom Pulsmaximum, davon der Exponent | -122144s$^{-1}$ (NIR) <br> -114967s$^{-1}$ (rot) | Diese Größe beschreibt die Lumineszenzlebensdauer beziehungsweise auch Anteile des Nachleuchtens |

Ausführungsbeispiel 4: Vertauschbarkeit und Bibliotheken

In diesem Beispiel wird Stoff I als Echtheitsmerkmal in ein Banknotenpapier eingebracht, die Stoffe II und III stellen einen alternativen Stoff und einen Nachahmer dar. Spektral unterscheiden sich Stoff I und II merklich, während Stoff I und III sehr ähnliche Emissionen aufweisen.

Zunächst werden für das Merkmal Stoff I zwei Auslesepulse festgelegt, die in ihrer Wirkung vertauschbar sind, nämlich Auslesepuls R und R*. Die Parameter der beiden Auslesepulse sind in der nachfolgenden Tabelle 5 zusammengefasst. Vertauschbarkeit bedeutet, dass die Reihenfolge der beiden Auslesepulse innerhalb einer Sequenz getauscht werden kann, ohne die Auslesekurve merklich zu ändern.

Tabelle 5 Parameter der Auslesepulse R und R*

| | R | R* |
|---|---|---|
| Wellenlänge | 638 nm | 853 nm |
| Strom | 800 mA | 1000 mA |
| Rel. Intensität nach Abschwächer | ca. 40% | 100% |
| Pulsdauer | 2 $\mu$s | 2 $\mu$s |
| Pulsabstand | 8 $\mu$s | 8 $\mu$s |

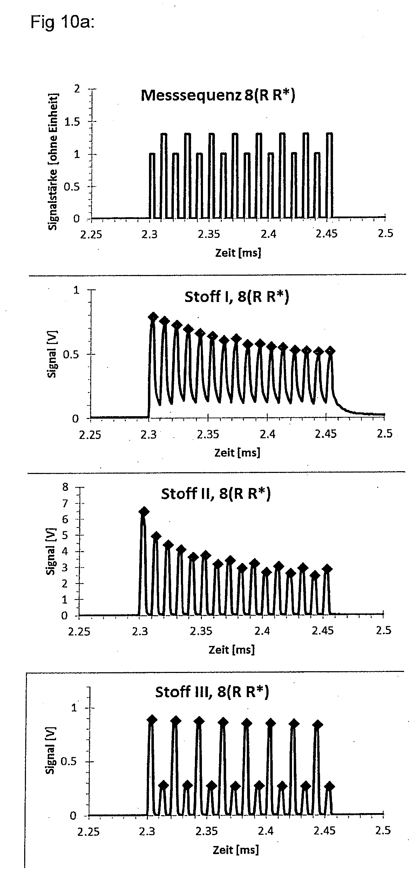

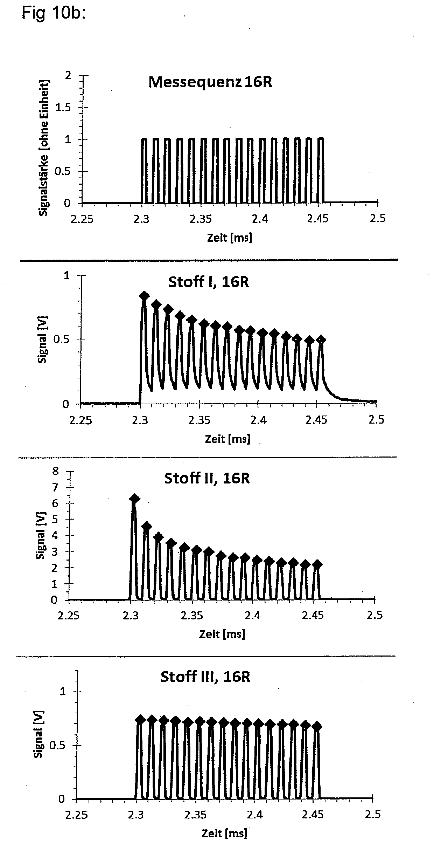

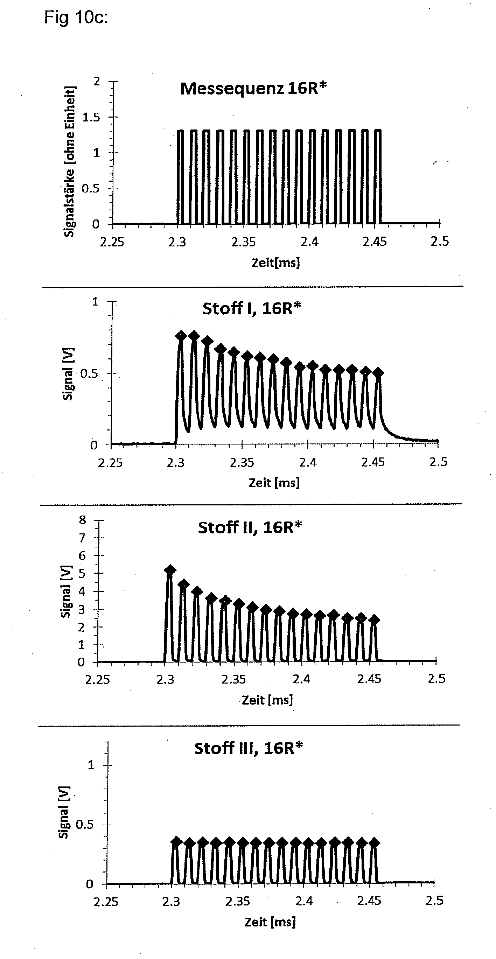

Geeignete Messsequenzen die R und R* enthalten, können die Vertauschbarkeit für den Echtheitsnachweis testen. Ein Beispiel solcher Sequenzen ist die Sequenz 8(R R*), in der sich R und R* abwechseln. Die Sequenz beginnt mit R und umfasst insgesamt 16 Auslesepulse. Die Messsequenz und die Auslesekurve am (durch einen blauen Lichtpuls) zuvor geladenen Stoffe I, II und III unter dieser Sequenz sind in Figur 10a bis c dargestellt.

Während die Auslesekurve für Stoff I einen gleichmäßigen Abfall der Intensität zeigt, ist die Auslesekurve für Stoff II und insbesondere für Stoff III deutlich moduliert. Betrachtet man zusätzlich die gleich langen Messsequenzen, die nur einen der beiden Auslesepulse enthalten, nämlich 16R und 16R* so verhalten sich die Auslesekurven für alle drei Stoffe (I, II, III) gleichmäßig fallend.

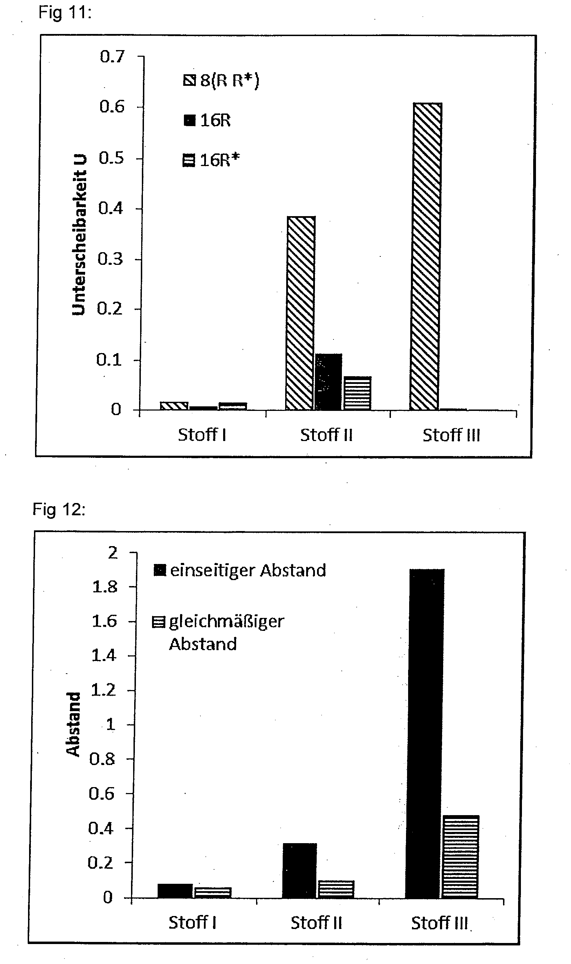

Zum Echtheitsnachweis werden Unterscheidbarkeitsmaße definiert. Solch ein Maß beschreibt, inwieweit zwei Pulse innerhalb einer Sequenz in ihrer Wirkung unterscheidbar sind. Für die Messsequenz 8(R R*) wird das Unterscheidbarkeitsmaß U folgendermaßen bestimmt: Zunächst wird für jeden Auslesepuls der Wert des zugehörigen Maximums der Auslesekurve bestimmt (als Rauten in Figur 10a bis c markiert). Dieser Wert wird als Pulsintensität $P_n$ bezeichnet, wobei der Index n den n-ten Puls der Messsequenz bezeichnet. Für den betrachteten n-ten Puls der Messsequenz wird berechnet, wie weit er vom geometrischen Mittel der Pulsintensitäten der benachbarten Pulse der Messsequenz entfernt ist, also

$$d_n = \sqrt{P_{n-1}P_{n+1}} - P_n,$$

wobei hier n von 2 bis 15 läuft, da der erste und letzte Puls keinen Nachbarn hat. Als Unterscheidbarkeitsmaß U wird hier die Standardabweichung der Werte $d_n$ bezeichnet. In Figur 11 ist für die Stoffe I, II und III jeweils das Unterscheidbarkeitsmaß U für die Messsequenz 8(R R*) dargestellt. Zum Vergleich ist außerdem jeweils der Wert des Unterscheidbarkeitsmaßes U für die Sequenzen 16 R und 16R* eingezeichnet. Stoff I weist unter allen drei Messsequenzen eine kleine Unterscheidbarkeit auf, U (Stoff I) <0,1. Die beiden anderen Stoffe weisen unter der Messsequenz 8(R R*) eine Unterscheidbarkeit U>0,3 auf. Für Stoff II und Stoff III sind die Auslesepulse R und R* in ihrer Wirkung nicht vertauschbar.

Zudem wird zur Messung unter der Sequenz 8(R R*) auch die Sequenz 16 R* und /oder 16R herangezogen.

Die Auslesekurve unter 16 R* dient als Schätzer für die Auslesekurve und damit für die Pulsintensitäten unter der Messsequenz 8(R R*). Zum Echtheitsnachweis wird der einseitige Abstand oder der gleichmäßige Abstand der Auslesekurven bestimmt. Dazu werden zunächst die Pulsintensitäten der Auslesekurven so normiert, dass jeweils die Pulsintensität des ersten Auslesepulses einer Messsequenz auf den Wert 1 gesetzt wird. Die so normierte Pulsintensität des n-ten Pulses unter einer Messsequenz wird mit $\widehat{P}_n$ bezeichnet.

Der einseitige Abstand $\varepsilon$ ergibt sich hier aus

$$\varepsilon = \sqrt{\sum_{n=1}^{16} \left( \hat{P}_n[8(RR^*)] - \hat{P}_n[16R^*] \right)^2}$$

Der gleichmäßige Abstand $\delta$ wird hier berechnet über

$$\delta = \frac{1}{16} \sum_{n=1}^{16} \sqrt{\left( \hat{P}_n[8(RR^*)] - \hat{P}_n[16R^*] \right)^2 + \left( \hat{P}_n[8(RR^*)] - \hat{P}_n[16R] \right)^2}$$

Beide Maße beschreiben letztlich, wie gut die Wirkung der Auslesepulse R und R* vertauschbar sind, wobei die Messsequenzen 16R und 16R* Schätzer für die Messsequenz 8 (R R*) bereitstellen.

Die Figur 12 stellt die Werte des einseitigen und gleichmäßigen Abstands für Stoff I, Stoff II und Stoff III zusammen, berechnet wie oben angegeben mit den Daten aus Figur 10a bis c. Nur für Stoff I weisen beide Maße kleine Werte ($\varepsilon < 0.1$; $\delta < 0.1$) auf. Nur für Stoff I sind die Auslesepulse R und R* auch auf diesen Maßen in ihrer Wirkung vertauschbar.

Diese Vorgehensweise lässt sich verallgemeinern, wobei nicht nur alternierende Pulsfolgen sondern auch komplexere Messsequenzen herangezogen werden können. Vertauschbarkeit lässt sich auch für mehr als zwei unterschiedliche Auslesepulse definieren. Für den Echtheitsnachweis werden deshalb geeignete Messsequenzen zu Referenzbibliotheken zusammengefasst. Hier gehören beispielsweise die genannten Messsequenzen 8(R R*), 16R und 16 R* in eine Referenzbibliothek. Eine weitere Sequenz dieser Referenzbibliothek ist aus Gruppen der Auslesepulse R und R* zusammengefasst, wobei in der Messsequenz zuerst acht Mal R und anschließend acht Mal R* ausgeführt werden, also 8R8R*. Auch für diese Messsequenz kann ein Unterscheidbarkeitsmaß definiert und/oder der einseitige und/oder der gleichmäßige Abstand berechnet und zum Echtheitsnachweis herangezogen werden. Weiterhin enthält die Referenzbibliothek weitere Messsequenzen der Länge 16, wobei unterschiedliche Permutationen der Abfolge von R und R* genutzt werden.

Bedarfsgemäß erweitern kürzere und längere Messsequenzen die Referenzbibliothek, beispielsweise gehören die Sequenz RRR* oder R*RR ebenso dazu wie 100R, 100R*, 100(RR*), die beispielsweise für den Echtheitsnachweis in unterschiedlichen Einsatzszenarien, z.B. Qualitätssicherung des Merkmals, eines Zwischenprodukts oder der Banknote genutzt werden können, ohne den in der maschinellen Banknotenbearbeitung ablaufenden Bewertungsprozess offenzulegen. Alternativ können auch unterschiedliche Prüfungsorte der Banknoten (z.B. POS-Kassen vs. Zentralbanken) unterschiedliche Messsequenzen der Referenzbibliotheken verwenden.

Bedarfsgemäß werden Messsequenzen zur Referenzbibliothek hinzugenommen, die andere Auslesepulse nutzen. Zu diesen Auslesepulsen gehören beispielsweise solche mit längerer Pulsdauer (10 $\mu$s, 100 $\mu$s) und/oder mit anderen Wellenlängen (zum Beispiel 488 nm, 532 nm, 658 nm, 758nm, 808nm, 915 nm, 980 nm) und/oder anderen Intensitäten der Lichtquellen. Mit diesen Pulssequenzen (die in Analogie zu den genannten gebildet werden und/oder andere Pulsreihenfolgen) wird sichergestellt, dass ein Stoff auf unterschiedlichen Sensoren sicher nachgewiesen werden kann. Insbesondere enthält die Referenzbibliothek auch Messsequenzen aus mindestens drei unterschiedlichen Auslesepulsen, zum Beispiel die Sequenz 4(SRR*), wobei der Auslesepuls S definiert ist durch die Parameter in nachfolgender Tabelle 6 Parameter des Auslesepulses.

Tabelle 6: Parameter des Auslesepulses

| | S |
|---|---|
| Wellenlänge | 1064 nm |
| Strom | 1000 mA |
| Rel. Intensität nach Abschwächer | ca. 40% |
| Pulsdauer | 4 $\mu$s |
| Pulsabstand | 8 $\mu$s |

Dieser zusätzliche Auslesepuls dient zur Unterscheidung von Stoff I und Stoff II in der Referenzbibliothek und ruft für Stoff II ein starkes Signal hervor, während Stoff I nur ein schwaches Signal liefert.

Ausführungsbeispiel 5: Überlagerte Auslesepulse und dritter Auslesepuls

In einem weiteren Beispiel wird Stoff I in ein geeignetes transparentes Lacksystem eingebracht und auf eine Trägerfolie aufgerakelt (10 Masseprozent Merkmalspulver im Lack, Nassfilmstärke 50 $\mu$m).

In einer Referenzbibliothek sind drei Abfragesequenzen hinterlegt.

Als erste Abfragesequenz wird eine Pulsfolge verwendet, in der zunächst 6 Pulse des Typs Q wie in Beispiel 2 eingesetzt werden. Anschließend wird das Echtheitsmerkmal mit drei weiteren Pulsen des Typs Q beleuchtet, denen ein lang anhaltender Puls L (Wellenlänge 780 nm, Bestromung 1000 mA, Pulsdauer 30 $\mu$s, Pulsabstand -30$\mu$s) überlagert ist. Der negative Pulsabstand stellt die Überlagerung sicher. Über einen Abschwächer wird die Beleuchtungsstärke so eingestellt, dass die vom ersten Puls der Überlagerung hervorgerufene Signalintensität doppelt so groß ist wie die Signalintensität die vom ersten Puls Q der Abfragesequenz hervorgerufen wird. Als Echtheitsnachweis wird dies geprüft und die Auslesegeschwindigkeiten für die beiden Teile der Abfragesequenz bestimmt. Während der Überlagerung lässt sich das Echtheitsmerkmal deutlich schneller auslesen.

Im Vergleich zum Echtheitsmerkmal weisen Stoff II und Stoff III ein vom Faktor 2 abweichendes Verhältnis der Signalintensität des ersten Pulses der Überlagerung zur Signalintensität des ersten Pulses der Abfragesequenz auf. Der Einfluss der Überlagerung auf die Auslesegeschwindigkeit ist für Stoff II und Stoff III deutlich geringer.

Als zweite Abfragesequenz ist die alternierende Sequenz 8(RR*) aus Beispiel 4 hinterlegt. Der Echtheitsnachweis folgt Beispiel 4.

Als dritte Abfragesequenz wird eine alternierende Folge 5(RTR*) eingesetzt. Puls T nutzt dieselbe Beleuchtungsquelle wie L (780 nm), ist allerdings als kurzer Puls definiert (Pulsdauer 1 $\mu$s, Pulsabstand 4 $\mu$s). Wiederum sind für das Echtheitsmerkmal die Pulse R und R* vertauschbar. Der Puls T stört die Vertauschbarkeit nicht.

Ausführungsbeispiel 6: Unterschiedliche Wirkung von Aufladepulsen

In Figur 2 werden die unterschiedlichen Aufladegeschwindigkeiten der drei OSL-Stoffe Stoff I, Stoff II und Stoff III bewertet. Dazu wird jeweils die gleiche Abfolge aus Auslesepuls und Aufladepuls zehnmal wiederholt zu einer Sequenz zusammengesetzt und deren Wirkung auf die drei OSL-Stoffe verglichen.

Der Auslesepuls misst dabei den Effekt des vorlaufenden Aufladepulses. Aus den Maxima der Auslesepulse entsteht so eine bewertbare Kurve zur Aufladegeschwindigkeit dieser Stoffe. Hier erkennt man deutliche Unterschiede in der Wirkung der Aufladepulse auf die Stoffe I, II bzw. III: Während die Aufladepulse keine deutliche Wirkung auf Stoff I zeigen, wird für Stoff II eine deutliche Steigerung der Intensität der optischen Emission in Antwort auf den jeweils zugehörigen Ausleseprozess beobachtet. Bei entsprechender quantitativer Auswertung lassen sich auch die Stoffe II und III voneinander anhand ihres Aufladeverhaltens unterschieden.

Ausführungsbeispiel 7: Aufladeprozesse mit unterschiedlicher Effizienz

Die OSL-Stoffe Stoff I und Stoff II werden mit einer wiederholten Sequenz aus

5x Aufladepuls 280nm
5x Auslesepuls 900nm
4x Aufladepuls 450nm
4x Auslesepuls 900nm

beaufschlagt.

Dabei wird für Stoff I und für Stoff II eine jeweils quantitativ unterschiedliche Aufladewirkung für die beiden Aufladeprozesse bei 280 nm bzw. bei 450 nm beobachtet, anhand derer die beiden Stoffe unterschieden werden können.

Für einen Fachmann ist es selbstverständlich, dass die angegebenen Beispiele nur beispielhaft aufgeführt sind und, sofern möglich, anderweitige Kombination und Wertebereiche, wie angegeben, denkbar sind. Die angegebenen Beispiele sollten demnach nicht abgrenzend gelesen werden, sondern können auch in Kombination mit den hierin angegebenen verschiedenen Merkmalen mitgelesen werden.

Literaturverzeichnis

1. Chen, R. und McKeever, S.W.S. Theory of thermoluminescence and related phenomena. Singapore: World Scientific Publishing, 1997.

2. Garlick, G.F.J. Phosphors and Phosphorescence. Reports on Progress in Physics. 1949, Bd. 12, S. 34-55.

3. McKeever, S.W.S. Thermoluminescence of solids. Cambridge: Cambridge University Press, 1988.

4. Yukihara, E.G. und McKeever, S.W.S. Optically Stimulated Luminescence. s.l.: Wiley, 2011.

5. Ronda, C. Luminescence: From Theory to Applications. Weinheim: Wiley-VCH, 2008.

6. Urbach, F., Pearlman, D. und Hemmendinger, H. On Infra-Red Sensitive Phosphors. Journal of the Optical Society of America. 1946, Bd. 36, 7, S. 372-381.

7. Katsumata, T., et al., Trap Levels in Eu-doped SrA12O4 Phosphor Crystals Co-Doped with Rare-Earth Elements. J. A. Ceram. Soc. 2006, Bd. 89, 3, S. 932-936.

**Patentansprüche**

1. Verfahren zum Prüfen eines Echtheitsmerkmals mit einem optischen Speicherleuchtstoff, umfassend die Schritte:

   a. Erfassen mindestens eines ersten Messwerts, insbesondere eine Speicherladung und/ oder eine Lichtemission des optischen Speicherleuchtstoffs;
   b. Beaufschlagen des optischen Speicherleuchtstoffs mit wenigstens einem Aufladeprozess;
   c. Erfassen mindestens eines zweiten Messwerts, insbesondere eine Speicherladung und/ oder eine Lichtemission des optischen Speicherleuchtstoffs; und
   d. Quantitative Bestimmung einer Wirkung des Aufladeprozesses auf den optischen Speicherleuchtstoff aus dem mindestens einen ersten und zweiten Messwert;
   wobei das Verfahren wenigstens einen Ausleseprozess umfasst und der wenigstens erste und/ oder zweite Messwert als erster und/ oder zweiter Auslesemesswert, die entsprechend basierend auf einer Detektion einer Lichtemission in Antwort auf wenigstens einen Ausleseprozess erfasst werden, wobei vorzugsweise der erste Messwert als Auslesemesswert basierend auf eine Detektion einer Lichtemission in Antwort auf einen ersten Ausleseprozess und der zweite Messwert als Auslesemesswert basierend auf eine Detektion einer Lichtemission in Antwort auf einen zweiten Ausleseprozess erfasst werden;
   wobei das Verfahren wenigstens eine Abfragesequenz aufweist, umfassend wenigstens zwei Ausleseprozesse, wobei aus dem ersten Ausleseprozess ein erster Auslesemesswert und aus dem zweiten Ausleseprozess ein zweiter Auslesemesswert erfasst werden; und das Verfahren die Schritte umfasst:

   d1. Erstellen einer jeweils der mindestens einen Abfragesequenz zugehörigen Auslesemesswertzeitreihe, umfassend mindestens den jeweils zu dem ersten Ausleseprozess zugehörigen ersten und den jeweils zu dem zweiten Ausleseprozess zugehörigen zweiten Auslesemesswert; und
   e1. Auswerten der jeweils der Abfragesequenz zugehörigen Auslesemesswertzeitreihe zur Bestimmung eines dynamischen Verhaltens aus der Auslesemesswertzeitreihe unter der jeweils zugehörigen Abfragesequenz, umfasst;

   wobei bei dem Schritt d1. das Auswerten der Auslesemesswertzeitreihe quantitativ erfolgt, um mindestens eine charakteristische Gedächtniseigenschaft des optischen Speicherleuchtstoffs zu bestimmen.

2. Verfahren nach Anspruch 1, wobei der optische Speicherleuchtstoff Leuchtzentren und Fallenzentren aufweist, wobei vorzugsweise in dem Speicherleuchtstoff vorhandene Ladungsträger durch den Aufladeprozess in Schritt b. zumindest teilweise auf die Fallenzentren übertragen werden.

3. Verfahren nach Anspruch 2, wobei durch den mindestens einen Ausleseprozess an den Fallenzentren gespeicherte Ladungsträger aus den Fallenzentren angeregt werden und auf die Leuchtzentren übergehen, wobei die Ladungsträger an den Leuchtzentren strahlend relaxieren.

4. Verfahren nach einem der vorhergehenden Ansprüche, wobei der Aufladeprozess, wenigstens einen Aufladepuls oder eine mit der Zeit intensitäts-modulierte kontinuierliche Aufladung umfasst.

5. Verfahren nach Anspruch 4, wobei der Aufladepuls einen Wellenlängenbereich von 240 nm und 550 nm, insbesondere dem Wellenlängenbereich im sichtbaren Licht von 400 nm bis 550 nm, aufweist, und/ oder die Pulsdauer in einem Bereich von 1 $\mu$s und 100 ms, insbesondere zwischen 10 $\mu$s und 100 ms, vorzugsweise zwischen 500 $\mu$s und 50 ms liegt.

6. Verfahren nach einem der vorhergehenden Ansprüche, wobei das Verfahren zwei Abfragesequenzen umfasst, die jeweils wenigstens einen ersten Ausleseprozess und einen zweiten Ausleseprozess umfassen und wobei vorzugsweise die erfassten Auslesemesswerte für jede Abfragesequenz unterschiedlich sind.

7. Verfahren nach einem der vorhergehenden Ansprüche, wobei jeder Ausleseprozess wenigstens einen Auslesepuls oder eine mit der Zeit intensitätsmodulierte kontinuierliche Auslesung umfasst.

8. Verfahren nach Anspruch 7, wobei der Auslesepuls eine Schwerpunktswellenlänge aus einen Wellenlängenbereich von 360 bis 1200 nm aufweist und/ oder die Pulsdauer in einem Bereich von 1 $\mu$s und 100 ms, insbesondere zwischen 5 $\mu$s und 50 $\mu$s oder zwischen 20 $\mu$s und 5 ms, insbesondere zwischen 40 $\mu$s und 1 ms, liegt.

9. Verfahren nach einem der vorhergehenden Ansprüche, weiterhin umfassend wenigstens eine Aufladesequenz, umfassend wenigstens einen ersten Aufladeprozess zum Beaufschlagen des optischen Speicherleuchtstoffs zeitlich vor der wenigstens einen Abfragesequenz.

10. Verfahren nach einem der vorhergehenden Ansprüche, umfassend eine wiederholte und/oder jeweils alternierende Abfolge des wenigstens einen Aufladeprozesses und des wenigstens einen Ausleseprozesses.

11. Verfahren nach einem der vorhergehenden Ansprüche, wobei die mindestens eine charakteristische Gedächtniseigenschaft ausgewählt ist aus: Persistenz, Gedächtnistiefe, Gedächtnisstärke, Sensitivität, Spezifität, Vertauschbarkeit, Assoziation, Kontinuität, Latenz, Sättigung, Isolation, Aufladegeschwindigkeit und/ oder Auslesegeschwindigkeit.

12. Verfahren nach einem der vorhergehenden Ansprüche, wobei der Schritt des Auswertens der Auslesemesswertzeitreihe auf mindestens eine charakteristische Gedächtniseigenschaft des optischen Speicherleuchtstoffs, eine Bestimmung der Form des zeitlichen Kurvenverlaufs der Auslesemesswertzeitreihe, oder eine Bestimmung von Parametern die den zeitlichen Kurvenverlauf der Auslesemesswertzeitreihe beschreiben, umfasst.

13. Verfahren nach einem der vorhergehenden Ansprüche, wobei sich mindestens ein Aufladeprozess gegenüber einem anderen Aufladeprozess wenigstens in der Wellenlänge und/oder Intensität und/oder Pulslänge unterscheiden.

14. Verfahren nach Anspruch 4, wobei sich mindestens ein erster Aufladepuls gegenüber einem anderen Aufladepuls wenigstens in der Pulsdauer und/ oder Pulsintervalldauer unterscheiden.

15. Verfahren nach einem der vorhergehenden Ansprüche, wobei durch das Beaufschlagen des optischen Speicherleuchtstoffs mit wenigstens einer Aufladesequenz und/oder mindestens einem Präparationsschritt eine Schwellenwertemission eingestellt wird.

16. Verfahren nach einem der vorhergehenden Ansprüche, wobei durch die Auslesemesswertzeitreihe von mindestens zwei Auslesemesswerten die Aufladegeschwindigkeit des optischen Speicherleuchtstoffs bestimmt wird.

17. Verfahren nach einem der vorhergehenden Ansprüche, umfassend Schritt f. Abgleich des bestimmten dynamischen Verhaltens aus der Auslesemesswertzeitreihe mit mindestens einer Referenz, sowie
g. Erkennen der Echtheit des Echtheitsmerkmals als Funktion des Abgleichs f.

18. Verfahren nach einem der vorhergehenden Ansprüche, umfassend den Schritt h. Beaufschlagen des optischen

**EP 3 469 559 B1**

Speicherleuchtstoffs mit wenigstens einer thermalisierenden Sequenz.

**Claims**

1. A method for checking an authenticity feature having an optical storage phosphor, comprising the steps of:

   a. capturing at least a first measurement value, in particular a storage charge and/or a light emission of the optical storage phosphor;
   b. subjecting the optical storage phosphor to at least one charging process;
   c. capturing at least a second measurement value, in particular a storage charge and/or a light emission of the optical storage phosphor; and
   d. quantitatively determining an effect of the charging process on the optical storage phosphor from the at least one first and second measurement value;
   wherein the method comprises at least one readout process and the at least first and/or second measurement values are captured as first and/or second readout measurement values which are accordingly captured based on a detection of a light emission in response to at least one readout process, wherein, preferably, the first measurement value is captured as a readout measurement value based on a detection of a light emission in response to a first readout process and the second measurement value as a readout measurement value based on a detection of a light emission in response to a second readout process;
   wherein the method has at least one query sequence, comprising at least two readout processes, wherein from the first readout process a first readout measurement value and from the second readout process a second readout measurement value are captured; and the method comprises the steps of:

   d1. creating a readout measurement value time series respectively associated with the at least one query sequence, comprising at least the first readout measurement value respectively associated with the first readout process and the second one respectively associated with the second readout process; and
   e1. evaluating the readout measurement value time series respectively associated with the query sequence for determining a dynamic behaviour from the readout measurement value time series under the respectively associated query sequence;

   wherein in step d1. the evaluating of the readout measurement value time series is effected quantitatively in order to determine at least one characteristic memory property of the optical storage phosphor.

2. The method according to claim 1, wherein the optical storage phosphor has light centers and trap centers, wherein, preferably, charge carriers present in the storage phosphor are at least partially transferred to the trap centers by the charging process in step b.

3. The method according to claim 2, wherein by the at least one readout process at the trap centers, stored charge carriers of the trap centers are excited and they transition to the light centers, the charge carriers radiantly relaxing at the light centers.

4. The method according to any of the preceding claims, wherein the charging process comprises at least one charging pulse or a continuous charging intensity-modulated over time.

5. The method according to claim 4, wherein the charging pulse has a wavelength region of 240 nm and 550 nm, in particular the wavelength region in the visible light of 400 nm to 550 nm, and/or the pulse duration in a region of 1 μs and 100 ms, in particular between 10 μs and 100 ms, preferably between 500 μs and 50 ms.

6. The method according to any of the preceding claims, wherein the method comprises two query sequences which respectively comprise at least a first readout process and a second readout process and wherein preferably the captured readout measurement values are different for each query sequence.

7. The method according to any of the preceding claims, wherein each readout process comprises at least one readout pulse or a continuous readout intensity-modulated over time.

8. The method according to claim 7, wherein the readout pulse has a centroid wavelength from a wavelength region of 360 to 1200 nm and/or the pulse duration is in a region of 1 μs and 100 ms, in particular between 5 μs and 50

μs or between 20 μs and 5 ms, in particular between 40 μs and 1 ms.

9. The method according to any of the preceding claims, further comprising at least one charging sequence comprising at least one first charging process for subjecting the optical storage phosphor temporally before the at least one query sequence.

10. The method according to any of the preceding claims, comprising a repeated and/or respectively alternating succession of the at least one charging process and the at least one readout process.

11. The method according to any of the preceding claims, wherein the at least one characteristic memory property is selected from: persistence, memory depth, memory strength, sensitivity, specificity, exchangeability, association, continuity, latency, saturation, isolation, charging speed and/or readout speed.

12. The method according to any of the preceding claims, wherein the step of evaluating the readout measurement value time series for at least one characteristic memory property of the optical storage phosphor comprises a determination of the shape of the temporal course of the curve of the readout measurement value time series or a determination of parameters which describe the temporal course of the curve of the readout measurement value time series.

13. The method according to any of the preceding claims, wherein at least one charging process differs from another charging process at least in the wavelength and/or intensity and/or pulse length.

14. The method according to claim 4, wherein at least a first charging pulse differs from another charging pulse at least in the pulse duration and/or pulse interval duration.

15. The method according to any of the preceding claims, wherein by subjecting the optical storage phosphor to at least one charging sequence and/or at least one preparation step a threshold emission is set.

16. The method according to any of the preceding claims, wherein by the readout measurement value time series of at least two readout measurement values the charging speed of the optical storage phosphor is determined.

17. The method according to any of the preceding claims, comprising step f. matching the particular dynamic behaviour of the readout measurement value time series with at least one reference, as well as
g. recognizing the authenticity of the authenticity feature as a function of the matching f.

18. The method according to any of the preceding claims, comprising the step h. subjecting the optical storage phosphor to at least one thermalizing sequence.

**Revendications**

1. Procédé de vérification d'une caractéristique de sécurité ayant une substance optique luminescente de stockage, comprenant les étapes :

   a. saisie d'au moins une première valeur de mesure, en particulier une charge de stockage et/ou une émission de lumière de la substance optique luminescente de stockage ;
   b. soumission de la substance optique luminescente de stockage à au moins un processus de recharge ;
   c. saisie d'au moins une deuxième valeur de mesure, en particulier une charge de stockage et/ou une émission de lumière de la substance optique luminescente de stockage ; et
   d. détermination quantitative d'un effet du processus de recharge sur la substance optique luminescente de stockage à partir de la au moins une première et deuxième valeur de mesure ;
   cependant que le procédé comprend au moins un processus de lecture et la au moins une première et/ou deuxième valeur de mesure sont saisies en tant que première et/ou deuxième valeur de mesure de lecture basées de manière correspondante sur une détection d'une émission de lumière en réponse à au moins un processus de lecture, cependant que, de préférence, la première valeur de mesure est saisie tant que valeur de mesure de lecture sur la base d'une détection d'une émission de lumière en réponse à un premier processus de lecture, et la deuxième valeur de mesure est saisie tant que valeur de mesure de lecture sur la base d'une détection d'une émission de lumière en réponse à un deuxième processus de lecture ;

cependant que le procédé comprend au moins une séquence de consultation comprenant au moins deux processus de lecture, cependant qu'une première valeur de mesure de lecture est saisie à partir du premier processus de lecture, et une deuxième valeur de mesure de lecture est saisie à partir du deuxième processus de lecture ; et le procédé comprend les étapes :

d1. établissement d'une série temporelle de valeurs de mesure de lecture respectivement associée à la au moins une séquence de consultation et comprenant au moins la première valeur de mesure de lecture respectivement associée au premier processus de lecture et la deuxième valeur de mesure de lecture respectivement associée au deuxième processus de lecture ; et

e1. évaluation de la série temporelle de valeurs de mesure de lecture respectivement associée à la au moins une séquence de consultation pour la détermination d'un comportement dynamique à partir de la série temporelle de valeurs de mesure de lecture dans la séquence de consultation respectivement associée ;

cependant que, à l'étape d1., l'évaluation de la série temporelle de valeurs de mesure de lecture a lieu quantitativement afin de déterminer au moins une propriété caractéristique de mémoire de la substance optique luminescente de stockage.

2. Procédé selon la revendication 1, cependant que la substance optique luminescente de stockage comporte des centres lumineux et des centres de piégeage, cependant que, de préférence, des porteurs de charge présents dans la substance luminescente de stockage sont transférés au moins partiellement dans les centres de piégeage par le processus de recharge à l'étape b.

3. Procédé selon la revendication 2, cependant que, par le au moins un processus de lecture, des porteurs de charge stockés aux centres de piégeage sont excités depuis les centres de piégeage et passent aux centres lumineux, cependant que les porteurs de charge relaxent en rayonnant aux centres lumineux.

4. Procédé selon une des revendications précédentes, cependant que le processus de recharge comprend au moins une impulsion de recharge ou une recharge continue modulée en intensité avec le temps.

5. Procédé selon la revendication 4, cependant que l'impulsion de recharge présente une plage de longueur d'ondes de 240 nm et 550 nm, en particulier la plage de longueur d'ondes dans la lumière visible comprise entre 400 nm et 550 nm, et/ou la durée d'impulsion est comprise entre 1 $\mu$s et 100 ms, en particulier entre 10 $\mu$s 100 ms, de préférence entre 500 $\mu$s 50 ms.

6. Procédé selon une des revendications précédentes, cependant que le procédé comprend deux séquences de consultation qui comprennent respectivement au moins un premier processus de lecture et un deuxième processus de lecture, et cependant que, de préférence, les valeurs de mesure de lecture saisies sont différentes pour chaque séquence de consultation.

7. Procédé selon une des revendications précédentes, cependant que chaque processus de lecture comprend au moins une impulsion de lecture ou une lecture continue modulée en intensité avec le temps.

8. Procédé selon la revendication 7, cependant que l'impulsion de lecture présente une longueur d'ondes dominante d'une plage de longueur d'ondes comprise entre 360 et 1200 nm, et/ou la durée d'impulsion est située dans une plage de 1 $\mu$s 100 ms, en particulier entre 5 $\mu$s 50 $\mu$s, ou entre 20 $\mu$s 5 ms, en particulier entre 40 $\mu$s 1 ms.

9. Procédé selon une des revendications précédentes, comprenant en outre au moins une séquence de recharge comprenant en outre au moins un premier processus de recharge pour la soumission de la substance optique luminescente de stockage temporellement avant la au moins une séquence de consultation.

10. Procédé selon une des revendications précédentes, comprenant une succession répétée et/ou respectivement alternée du au moins un processus de recharge et du au moins un processus de lecture.

11. Procédé selon une des revendications précédentes, cependant que la au moins une propriété caractéristique de mémoire est choisie parmi : persistance, profondeur de mémoire, puissance de mémoire, sensibilité, spécificité, échangeabilité, association, continuité, latence, saturation, isolation, vitesse de recharge et/ou vitesse de lecture.

**12.** Procédé selon une des revendications précédentes, cependant que l'étape de l'évaluation de la série temporelle de valeurs de mesure de lecture comprend, pour au moins une propriété caractéristique de mémoire de la substance optique luminescente de stockage, une détermination de la forme du tracé temporel de la courbe de la série temporelle de valeurs de mesure de lecture, ou une détermination de paramètres qui décrivent le tracé temporel de la courbe de la série temporelle de valeurs de mesure de lecture.

**13.** Procédé selon une des revendications précédentes, cependant qu'au moins un processus de recharge se différencie par rapport à un autre processus de recharge au moins quant à la longueur d'ondes et/ou l'intensité et/ou la longueur d'impulsion.

**14.** Procédé selon la revendication 4, cependant qu'au moins une première impulsion de recharge se différencie par rapport à une autre impulsion de recharge au moins quant à la durée d'impulsion et/ou durée d'intervalle d'impulsion.

**15.** Procédé selon une des revendications précédentes, cependant que, par la soumission de la substance optique luminescente de stockage à au moins une séquence de recharge et/ou à au moins une étape de préparation, une émission de valeur seuil est réglée.

**16.** Procédé selon une des revendications précédentes, cependant que, par la série temporelle de valeurs de mesure de lecture d'au moins deux valeurs de mesure de lecture, la vitesse de recharge de la substance optique luminescente de stockage est déterminée.

**17.** Procédé selon une des revendications précédentes, comprenant l'étape f. comparaison du comportement dynamique déterminé, à partir de la série temporelle de valeurs de mesure de lecture, avec au moins une référence, ainsi que g. reconnaissance de l'authenticité de la caractéristique d'authenticité en tant que fonction de la comparaison f..

**18.** Procédé selon une des revendications précédentes, comprenant l'étape h. soumission de la substance optique luminescente de stockage à au moins une séquence thermalisante.

Fig 1:

Fig 2:

Fig 3:

Fig 4:

Fig 5:

Fig 6:

Fig 7:

Fig 8:

Fig 9:

Fig 10a:

Fig 10b:

Fig 10c:

Fig 11:

Fig 12:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1316924 A
- WO 2010064965 A
- DE 102011010756
- WO 2014132415 A

**In der Beschreibung aufgeführte Nicht-Patentliteratur**

- **KATSUMATA, T. et al.** Trap Levels in Eu-doped SrAl2O4 Phosphor Crystals Co-Doped with Rare-Earth Elements. *J. A,. Ceram. Soc.,* 2006, vol. 89 (3), 932-936
- **CHEN, R. ; MCKEEVER, S.W.S.** Theory of thermoluminescence and related phenomena. World Scientific Publishing, 1997
- **GARLICK, G.F.J.** Phosphors and Phosphorescence. *Reports on Progress in Physics,* 1949, vol. 12, 34-55
- **MCKEEVER, S.W.S.** Thermoluminescence of solids. Cambridge University Press, 1988
- **YUKIHARA, E.G. ; MCKEEVER, S.W.S.** Optically Stimulated Luminescence. Wiley, 2011
- **RONDA, C.** Luminescence: From Theory to Applications. Wiley-VCH, 2008
- **URBACH, F. ; PEARLMAN, D. ; HEMMENDINGER, H.** On Infra-Red Sensitive Phosphors. *Journal of the Optical Society of America,* 1946, vol. 36 (7), 372-381
- **KATSUMATA, T. et al.** Trap Levels in Eu-doped SrA12O4 Phosphor Crystals Co-Doped with Rare-Earth Elements. *J. A. Ceram. Soc.,* 2006, vol. 89 (3), 932-936